# EUROPEAN PATENT SPECIFICATION

(11) **EP 2 773 141 B1**
(45) Date of publication and mention of the grant of the patent: **16.05.2018**
(21) Application number: 12843199.6
(22) Date of filing: 29.10.2012
(51) Int. Cl.: H04W 36/00, H04W 88/06

(54) **BRANCHED DATA TRANSMISSION METHOD AND USER EQUIPMENT**
VERZWEIGTES DATENÜBERTRAGUNGSVERFAHREN UND BENUTZERAUSRÜSTUNG
PROCÉDÉ DE TRANSMISSION DE DONNÉES DÉRIVÉES ET ÉQUIPEMENT UTILISATEUR

(30) Priority: 27.10.2011 CN 201110331948
(43) Date of publication of application: 03.09.2014
(73) Proprietor: Huawei Technologies Co., Ltd., Longgang District Shenzhen, Guangdong 518129 (CN)
(72) Inventor: ZHANG, Jian, Shenzhen Guangdong 518129 (CN); QUAN, Wei, Shenzhen Guangdong 518129 (CN); JIANG, Yi, Shenzhen Guangdong 518129 (CN); ZHANG, Peng, Shenzhen Guangdong 518129 (CN); HAN, Guanglin, Shenzhen Guangdong 518129 (CN)
(74) Representative: Goddar, Heinz J.
(86) International application number: PCT/CN2012/083656
(87) International publication number: WO 2013/060300

(56) References cited:
- WO-A1-2011/100492
- CN-A- 1 430 340
- CN-A- 101 990 247
- CN-U- 201 839 451
- US-A1- 2010 208 698
- US-A1- 2011 134 831
- US-A1- 2011 183 678
- US-A1- 2011 188 376

## Description

### TECHNICAL FIELD

The present invention relates to the field of communications technologies, and in particular, to a data offloading and transmission method, user equipment, and base station.

### BACKGROUND

Long Term Evolution (LTE for short) is considered as a mainstream technology for evolution from 3G to 4G. A study of LTE covers some parts that are commonly believed to be very important, such as decreased waiting time, improved user data rate, improved system capacity and coverage, and decreased operating expenses.

An LTE project of the 3rd Generation Partnership Project (3GPP for short) is the largest new technical research and development project kicked off by 3GPP in recent two years. This type of technology, centering on orthogonal frequency division multiplexing (OFDM for short) or frequency division multiple access (FDMA for short), may be considered as a "quasi-4G" technology. Major performance objectives of the 3GPP LTE project include: A peak rate of 100 Mbps in the downlink and a peak rate of 50 Mbps in the uplink can be provided in a 20 MHz spectral bandwidth; performance of users at a cell edge is improved; cell capacity is improved; system delay is reduced; unidirectional transmission delay is less than 5 ms inside a user plane; time for a control plane to transit from a sleep state to an activated state is shorter than 50 ms; time for transition from a camping state to the activated state is shorter than 100 ms; cell coverage of a 100 km radius is supported; an access service at a rate higher than 100 kbps can be provided for a 350 km/h high-speed moving user; and a paired or unpaired spectrum is supported, and multiple bandwidths from 1.25 MHz to 20 MHz can be flexibly configured.

A wireless local area network (WLAN for short) is a system that uses a radio frequency (RF for short) technology to transmit data. The WLAN is a supplement to a wired local area network and can achieve a purpose of network extension, so that the wireless local area network can use a simple access architecture to enable a user to use the wireless local area network to implement a smooth network without a network cable and without distance limitation. As a standard of the WLAN, wireless fidelity (WIFI for short) is a wireless network composed of a wireless access point (AP for short) and a wireless network interface card. The AP is generally referred to as a network bridge or an access point, and is a bridge between a conventional wired local area network and a wireless local area network. Therefore, any user terminal on which a wireless network interface card is installed can use the AP to share resources of a wired local area network or even a wide area network. The AP is equivalent to a hub with a built-in wireless transmitter, or a router with a built-in wireless transmitter, whereas the wireless network interface card is a client device responsible for receiving signals transmitted by the AP.

Currently, for an evolved packet system (EPS for short), an air interface uses the LTE technology, and the evolved packet system is implemented by deploying evolved base stations (eNB for short). When a user equipment (UE for short) uses a service in the EPS, however, the UE can implement transmission only by using the LTE air interface of an eNB deployed on a network.

Along with an increase in a bandwidth requirement, a network operator needs to increase a transmission bandwidth of the air interface by deploying more LTE base stations and reducing coverage, thereby causing an increase in investment costs and maintenance costs. Therefore, traffic of data to be transmitted on the LTE air interface needs to be distributed to another available access technology, such as WIFI, so as to meet an ever-increasing mobile bandwidth requirement and make up for a defect in insufficient transmission bandwidth of the LTE air interface.

In the existing LTE technology, data transmitted on the air interface is borne on different radio bearers (RB for short) according to information, such as quality of service (QoS for short). A signaling radio bearer (SRB for short) is used to bear a radio resource control (RRC for short) message, and a data radio bearer (DRB for short) is used to bear data. In a process of establishing an RRC connection between an eNB and a UE and/or after the RRC connection establishment is complete, the eNB may configure one or more RBs for the UE, so as to bear different types of data. US2010/0208698A1 discloses a wireless transmit/receive unit (WTRU) that may communicate using a data flow that is defined according to flow identification information (FII). The WTRU may participate in the transfer of the data flow between access networks of diverse radio access technologies. The WTRU may communicate with a mobility function to obtain access network and mobility policy information. The mobility function may be, for example, an Access Network Discovery Function (ANDSF). The mobility policy information may describe the conditions by which the transfer of data flows between access networks may be permitted.

US2011/0134831A1 discloses a method for enabling interoperability between different typesof wireless communication systems operating with different types of air interfaces to provide at least downlink radio resource aggregation for a user equipment. The method includes providing a common set of upper radio layer functionalities for one or more radio bearers assigned to the user equipment, the one or more radio bearers being associated with a first wireless communication system and a second wireless communication system. The method further includes performing wireless communications with the user equipment via one or more of the radio bearers via the first and second wireless communication systems.

However, when offloading is performed by using LTE and WIFI, the prior art does not provide a specific data processing method.

### SUMMARY

The present invention provides a data offloading and transmission method of claim 1 and a user equipment of claim 9, so as to implement offloading and transmission between an LTE network and a short-range communications network.

A first aspect of the invention provided a user equipment, comprising a data offloading and transmission method, comprising:
receiving, by a user equipment, a data offloading indication sent by a base station, wherein the data offloading indication is sent by the base station to the user equipment after a serving access point of a short-range communications network is allocated by using a data offloading configuration process to the user equipment; and
performing, by the user equipment, data offloading and transmission by using uplink transmission resources of short-range communications and/or uplink transmission resources of Long Term Evolution according to the data offloading indication; wherein the user equipment performs a multiplexing operation on data transmitted on at least one radio bearer, on which data is transmitted by using the uplink transmission resources of the Long Term Evolution or the short-range communications, without considering and affecting a radio bearer on which data is transmitted by using the uplink transmission resources of the short-range communications or the Long Term Evolution; and the user equipment updates a respective Bj value of the at least one radio bearer, on which the data is transmitted by using the uplink transmission resources of the Long Term Evolution or the short-range communications, wherein Bj is used to calculate, when the user equipment performs a first round of the multiplexing operation, an amount of data encapsulated in the radio bearer, on which the data is transmitted by using the uplink transmission resources of the Long Term Evolution or the short-range communications, respectively, and if the transmission of the data on the at least one radio bearer can not be completed by merely using the available uplink transmission resources of the Long Term Evolution or the short-range communications, respectively, the user equipment performs a multiplexing operation when transmitting, by using currently available uplink transmission resources of the Long Term Evolution or the short-range communications, respectively, remaining data on the at least one radio bearer, where the user equipment uses an updated Bj value of the at least one radio bearer when performing the multiplexing operation for the remaining data on the at least one radio bearer, wherein the operation of updating Bj is: during the first round of multiplexing, decreasing the value of Bj according to an actual amount of data encapsulated in the radio bearer that corresponds to Bj and, later, increasing Bj every transmission time interval, TTI, according to the speed of a prioritized bitrate, PBR, of the radio bearer, until reaching a pre-configured value, wherein j is a logical channel number that corresponds to the radio bearer.
A second aspect of the invention provides a user equipment, comprising: a receiving module, configured to receive a data offloading indication sent by a base station, wherein the data offloading indication is sent by the base station to the user equipment after a serving access point of a short-range communications network is allocated by using a data offloading configuration process to the user equipment;
a transmitting module, configured to perform data offloading and transmission by using uplink transmission resources of short-range communications and/or uplink transmission resources of Long Term Evolution according to the data offloading indication received by the receiving module; and
a multiplexing module, configured to perform a multiplexing operation on data transmitted on at least one radio bearer, on which data is transmitted by using the uplink transmission resources of the Long Term Evolution or the short-range communications, without considering and affecting a radio bearer on which the data is transmitted by using the uplink transmission resources of the short-range communications or the Long Term Evolution; and update a respective Bj value of the at least one radio bearer, on which the data is transmitted by using the uplink transmission resources of the Long Term Evolutions or the short-range communications, wherein Bj is used to calculate, when the user equipment performs a first round of the multiplexing operation, an amount of data encapsulated in the radio bearer, on which the data is transmitted by using the uplink transmission resources of the Long Term Evolution or the short-range communications, respectively, the user equipment being adapted to, if the transmission of the data on the at least one radio bearer can not be completed by merely using the available uplink transmission resources of the Long Term Evolution or the short-range communications, respectively, perform a multiplexing operation when transmitting, by using currently available uplink transmission resources of the Long Term Evolution or the short-range communications, respectively, remaining data on the at least one radio bearer, the user equipment being adapted to use an updated Bj value of the at least one radio bearer when performing the multiplexing operation for the remaining data on the at least one radio bearer, wherein the operation of updating Bj is: during the first round of multiplexing, decreasing the value of Bj according to an actual amount of data encapsulated in the radio bearer that corresponds to Bj and, later, increasing Bj every transmission time interval, TTI, according to the speed of a prioritized bitrate, PBR, of the radio bearer, until reaching a pre-configured value, wherein j is a logical channel number that corresponds to the radio bearer. In the embodiments of the present invention, after a user equipment receives a data offloading indication sent by a base station, data offloading and transmission may be performed by using uplink transmission resources of short-range communications and/or uplink transmission resources of Long Term Evolution according to the data offloading indication. In this way, offloading by a short-range communications network can be implemented from a Long Term Evolution network, thereby implementing offloading and transmission between the short-range communications network and the Long Term Evolution network.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a data offloading and transmission method according to an embodiment of the present invention;
FIG. 2 is a flowchart of a data offloading and transmission method according to another embodiment of the present invention;
FIG. 3 is a flowchart of a data offloading and transmission method according to still another embodiment of the present invention;
FIG. 4 is a flowchart of a data offloading and transmission method according to still another embodiment of the present invention;FIG. 5 is a flowchart of a data offloading and transmission method according to still another embodiment of the present invention;
FIG. 6 is a flowchart of a data offloading and transmission method according to still another embodiment of the present invention;
FIG. 7 is a schematic structural diagram of a user equipment according to an embodiment of the present invention;
FIG. 8 is a schematic structural diagram of a user equipment according to another embodiment of the present invention;
FIG. 9 is a schematic structural diagram of a base station according to an embodiment of the present invention; and
FIG. 10 is a schematic structural diagram of a base station according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

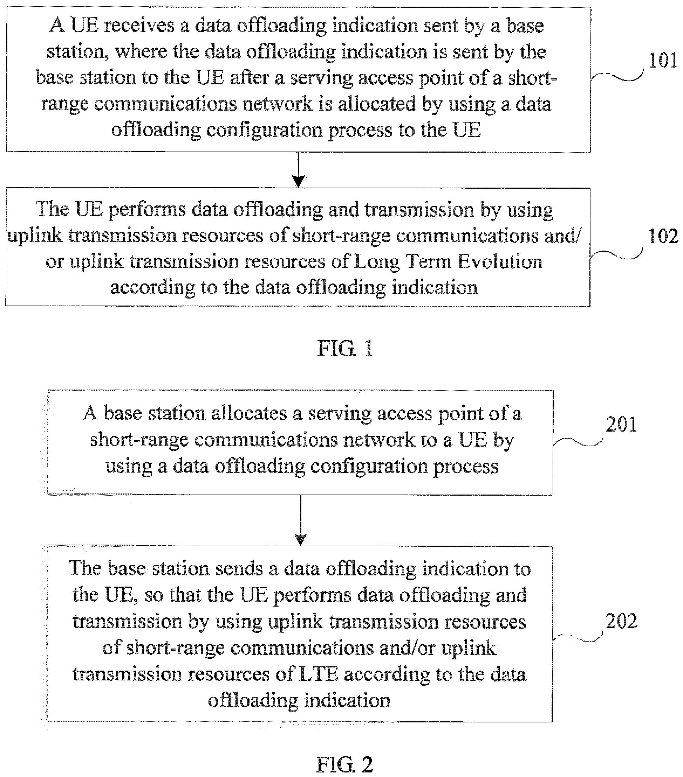

FIG. 1 is a flowchart of a data offloading and transmission method according to an embodiment of the present invention. As shown in FIG. 1, the data offloading and transmission method may include the following steps:
Step 101: A UE receives a data offloading indication sent by a base station, where the data offloading indication is sent by the base station to the UE after a serving access point of a short-range communications network is allocated by using a data offloading configuration process to the UE.
Step 102: The UE performs data offloading and transmission by using uplink transmission resources of short-range communications and/or uplink transmission resources of Long Term Evolution according to the data offloading indication.

In an implementation manner of this embodiment, the performing, by the UE, data offloading and transmission by using uplink transmission resources of short-range communications and/or uplink transmission resources of LTE according to the data offloading indication may be:
when there is data to be transmitted on an RB of the UE, and if currently there are available uplink transmission resources of the LTE, transmitting, by the UE by using the available uplink transmission resources of the LTE, the data to be transmitted on the RB; or if currently there are available uplink transmission resources of the short-range communications, transmitting, by the UE by using the available uplink transmission resources of the short-range communications, the data to be transmitted on the RB; or if currently there are available uplink transmission resources of the LTE and available uplink transmission resources of the short-range communications, transmitting, by the UE by using the available uplink transmission resources of the LTE and/or the available uplink transmission resources of the short-range communications, the data to be transmitted on the RB.

Specifically, if currently there are available uplink transmission resources of the LTE and available uplink transmission resources of the short-range communications, the UE may transmit by default, by using the available uplink transmission resources of the LTE, the data to be transmitted on the RB; or the UE transmits, by using the available uplink transmission resources of the LTE or the available uplink transmission resources of the short-range communication according to the data offloading indication, the data to be transmitted on the RB; or the UE transmits, by randomly using the available uplink transmission resources of the LTE or the available uplink transmission resources of the short-range communications, the data to be transmitted on the RB.

In this implementation manner, the UE may transmit, first by using the available uplink transmission resources of the short-range communications, the data to be transmitted on the RB. If the transmission of the data to be transmitted on the RB cannot be completed by merely using the available uplink transmission resources of the short-range communications, the UE may transmit, by using the available uplink transmission resources of the LTE, remaining data to be transmitted on the RB.

In addition, if currently there are no available uplink transmission resources of the LTE or available uplink transmission resources of the short-range communications, the UE may send a scheduling request (SR for short) to the base station to apply for the uplink transmission resources of the LTE, so as to transmit the data to be transmitted on the RB; or the UE may apply to the serving access point for the uplink transmission resources of the short-range communications by using the short-range communications network according to information of the serving access point carried in the data offloading indication, so as to transmit the data to be transmitted on the RB.

In another implementation manner of this embodiment, the data offloading indication carries information of an RB of the UE, where the RB of the UE is configured by the base station and can be offloaded.

In this implementation manner, the performing, by the UE, data offloading and transmission by using uplink transmission resources of short-range communications and/or uplink transmission resources of LTE according to the data offloading indication may be: when there is data to be transmitted on the RB of the UE, where the RB of the UE is configured by the base station and can be offloaded, and if currently there are available uplink transmission resources of the short-range communications, transmitting, by the UE by using the available uplink transmission resources of the short-range communications, the data to be transmitted on the RB of the UE that can be offloaded; or if currently there are no available uplink transmission resources of the short-range communications but there are available uplink transmission resources of the LTE, transmitting, by the UE by using the available uplink transmission resources of the LTE, the data to be transmitted on the RB of the UE that can be offloaded;
or,
when there is data to be transmitted on the RB of the UE, where the RB of the UE is configured by the base station and can be offloaded, if a priority of the RB is higher than other RBs of the UE on which there is already data to be transmitted except for the RB, or if there is no data to be transmitted on other RBs, sending, by the UE, a buffer status report (BSR for short) to the base station; and if currently there are available uplink transmission resources of the short-range communications, transmitting, by the UE by using the available uplink transmission resources of the short-range communications, the data to be transmitted on the RB of the UE that can be offloaded; or if currently there are no available uplink transmission resources of the short-range communications but there are available uplink transmission resources of the LTE, transmitting, by the UE by using the available uplink transmission resources of the LTE, the data to be transmitted on the RB of the UE that can be offloaded; or if currently there are no available uplink transmission resources of the short-range communications or available uplink transmission resources of the LTE, sending, by the UE, an SR to the base station to apply for the uplink transmission resources of the LTE, so as to transmit the data to be transmitted on the RB of the UE that can be offloaded;
or,
placing, by the base station, the RB of the UE into a same logical channel group (LCG for short), where the RB of the UE is configured by the base station and can be offloaded, and when there is data to be transmitted on the RB of the UE, where the RB of the UE is configured by the base station and can be offloaded, and if currently there are available uplink transmission resources of the short-range communications, transmitting, by the UE by using the available uplink transmission resources of the short-range communications, the data to be transmitted on the RB of the UE that can be offloaded; or if currently there are no available uplink transmission resources of the short-range communications, applying to the serving access point, by the UE, for the uplink transmission resources of the short-range communications by using the short-range communications network according to information of the serving access point carried in the data offloading indication, so as to transmit the data to be transmitted on the RB of the UE that can be offloaded.

Further, if the transmission of the data to be transmitted on the RB of the UE that can be offloaded cannot be completed by merely using the available uplink transmission resources of the short-range communications, and if currently there are available uplink transmission resources of the LTE, the UE transmits, by using the available uplink transmission resources of the LTE, remaining data to be transmitted on the RB of the UE that can be offloaded; or if the transmission of the data to be transmitted on the RB of the UE that can be offloaded cannot be completed by merely using the available uplink transmission resources of the short-range communications, and if currently there are no available uplink transmission resources of the LTE, the UE sends an SR to the base station to apply for the uplink transmission resources of the LTE, so as to transmit remaining data to be transmitted on the RB of the UE that can be offloaded.

In still another implementation manner of this embodiment, the data offloading indication carries information of an RB of the UE, where the RB is configured by the base station and can be offloaded.

In this implementation manner, the performing, by the UE, data offloading and transmission by using uplink transmission resources of short-range communications and/or uplink transmission resources of LTE according to the data offloading indication may be: when there is data to be transmitted on the RB of the UE, where the RB of the UE is configured by the base station and can be offloaded, and if currently there are available uplink transmission resources of the short-range communications, transmitting, by the UE by using the available uplink transmission resources of the short-range communications, the data to be transmitted on the RB of the UE that can be offloaded; or if currently there are no available uplink transmission resources of the short-range communications, applying to the serving access point, by the UE, for the uplink transmission resources of the short-range communications by using the short-range communications network according to information of the serving access point carried in the data offloading indication, so as to transmit the data to be transmitted on the RB of the UE that can be offloaded; and
when there is data to be transmitted on an RB of the UE, where not offloading is configured by the base station for the RB of the UE, sending, by the UE, a BSR to the base station; and if currently there are available uplink transmission resources of the LTE, transmitting, by the UE by using the available uplink transmission resources of the LTE, the data to be transmitted on the RB of the UE, where not offloading is configured by the base station for the RB of the UE; or if currently there are no available uplink transmission resources of the LTE, sending, by the UE, an SR to the base station to apply for the uplink transmission resources of the LTE, so as to transmit the data to be transmitted on the RB of the UE, where not offloading is configured by the base station for the RB of the UE.

In still another implementation manner of this embodiment, the data offloading indication carries information of an RB of the UE, where the RB of the UE is configured by the base station and can be offloaded.

In this implementation manner, the performing, by the UE, data offloading and transmission by using uplink transmission resources of short-range communications and/or uplink transmission resources of LTE according to the data offloading indication may be: when there is data to be transmitted on the RB of the UE, where the RB of the UE is configured by the base station and can be offloaded, if the data to be transmitted is data to be transmitted for the first time, transmitting, by the UE by using currently available uplink transmission resources of the short-range communications, the data to be transmitted on the RB of the UE that can be offloaded; or if the data to be transmitted is data to be retransmitted, transmitting, by the UE by using currently available uplink transmission resources of the LTE, the data to be transmitted on the RB of the UE that can be offloaded.

In the foregoing implementation manners, there includes the following two cases in which there is data to be transmitted on an RB of the UE, where the RB of the UE is configured by the base station and can be offloaded: (1) Originally there is no data to be transmitted on the RB of the UE, where the RB is configured by the base station and can be offloaded, but now some data needs to be transmitted; (2) Originally there is data on the RB of the UE, where the RB of the UE is configured by the base station and can be offloaded, but the data does not need to be (or cannot be) transmitted, for example, a data packet has already been sent at a radio link control (RLC for short) layer to a peer end but no acknowledgement message has been received from the peer end; or outside a sending window there is still data that needs to be transmitted but cannot be sent because the sending window is full, and now the data needs to be (or can be) transmitted.

In this embodiment, the UE may perform a multiplexing operation on data transmitted on at least one RB, on which data is transmitted by using the uplink transmission resources of the LTE, without considering and affecting an RB on which data is transmitted by using the uplink transmission resources of the short-range communications; likewise, the UE may perform a multiplexing operation on data transmitted on at least one RB, on which data is transmitted by using the uplink transmission resources of the short-range communications, without considering and affecting an RB on which data is transmitted by using the uplink transmission resources of the LTE; and when performing the multiplexing operation on the data transmitted on the at least one RB, on which the data is transmitted by using the uplink transmission resources of the short-range communications, the UE needs to update a respective Bj value of the at least one RB, on which the data is transmitted by using the uplink transmission resources of the short-range communications, where Bj is used to calculate, when the UE performs a first round of the multiplexing operation, an amount of data encapsulated in the RB, on which the data is transmitted by using the uplink transmission resources of the short-range communications.

In addition, the UE performs the multiplexing operation on the data transmitted on the at least one RB, on which the data is transmitted by using the uplink transmission resources of the short-range communications, and updates the respective Bj value of the at least one RB, on which the data is transmitted by using the uplink transmission resources of the short-range communications, where Bj is used to calculate, when the UE performs the first round of the multiplexing operation, the amount of data encapsulated in the RB, on which the data is transmitted by using the uplink transmission resources of the short-range communications; and if the transmission of the data on the at least one RB cannot be completed by merely using the available uplink transmission resources of the short-range communications, the UE performs a multiplexing operation when transmitting, by using currently available uplink transmission resources of the LTE, remaining data on the at least one RB, where the UE uses the updated Bj value of the at least one RB when performing the multiplexing operation for the remaining data on the at least one RB. The operation of updating Bj may specifically be: during the first round of the multiplexing, decreasing the value of Bj according to an actual amount of data encapsulated in the RB that corresponds to Bj. For example, it is assumed that Bj is equal to 100 before the encapsulation and the actual amount of data encapsulated in the RB that corresponds to Bj is 90, Bj decreases to 10; or if the actual amount of data encapsulated in the RB that corresponds to Bj is 110, Bj decreases to -10. Later, Bj increases every transmission time interval (TTI for short) according to speed of a prioritized bit rate (PBR for short) of the RB, till reaching a pre-configured value.

In this embodiment, the information of the RB of the UE that can be offloaded may include an identifier of the RB of the UE that can be offloaded.

In this embodiment, the short-range communications may be implemented by using a technology, such as WIFI, ZigBee, or home radio frequency (HomeRF for short), and this is not limited in this embodiment of the present invention. In this embodiment of the present invention, however, description is made by using an example that the short-range communications are implemented by using the WIFI technology.

In the foregoing embodiment, after a UE receives a data offloading indication sent by a base station, data offloading and transmission may be performed by using uplink transmission resources of short-range communications and/or uplink transmission resources of LTE according to the data offloading indication. In this way, offloading by a short-range communications network can be implemented from an LTE network, thereby implementing offloading and transmission between the short-range communications network and the LTE network. In addition, the number of times of sending an SR can be reduced, thereby reducing interference to other user equipments.

FIG. 2 is a flowchart of a data offloading and transmission method according to another embodiment of the present invention. As shown in FIG. 2, the data offloading and transmission method may include the following steps:
Step 201: A base station allocates a serving access point of a short-range communications network to a UE by using a data offloading configuration process.
Step 202: The base station sends a data offloading indication to the UE, so that the UE performs data offloading and transmission by using uplink transmission resources of short-range communications and/or uplink transmission resources of LTE according to the data offloading indication.

Further, in this embodiment, the base station may configure a radio bearer of the UE that can be offloaded by using the foregoing offloading configuration process; and add, in the data offloading indication, information of the radio bearer of the UE that can be offloaded, and send the information to the user equipment.

Further, the base station may further place the radio bearer of the UE that can be offloaded into a same LCG; and when the base station determines that the uplink transmission resources of the short-range communications cannot meet a quality of service (QoS for short) requirement of the RB in the same LCG, the base station instructs the UE to transmit, by using the uplink transmission resources of the LTE, data to be transmitted on the RB in the same LCG.

In this embodiment, the short-range communications may be implemented by using a technology, such as WIFI, ZigBee, or HomeRF, and this is not limited in this embodiment of the present invention. In this embodiment of the present invention, however, description is made by using an example that the short-range communications are implemented by using the WIFI technology.

In the foregoing embodiment, a base station allocates a serving access point to a UE by using a offloading configuration process, and sends a data offloading indication to the UE, so that the UE performs data offloading and transmission by using uplink transmission resources of short-range communications and/or uplink transmission resources of LTE according to the data offloading indication. In this way, offloading by a short-range communications network can be implemented from an LTE network, thereby implementing offloading and transmission between the short-range communications network and the LTE network.

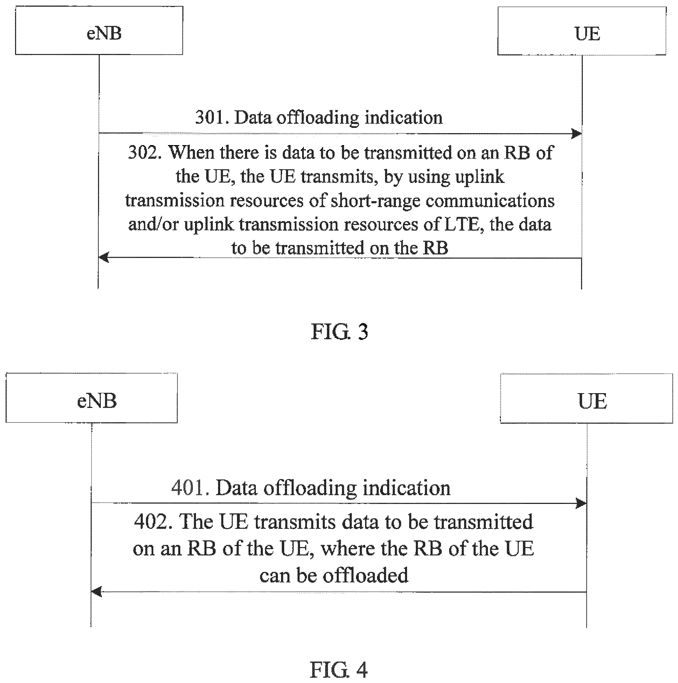

FIG. 3 is a flowchart of data offloading and transmission a method according to still another embodiment of the present invention. This embodiment is applicable to a scenario in which data offloading is not RB-based, that is, an eNB does not need to configure an RB of a UE, where the RB can be offloaded. Then during the data offloading and transmission, data of all RBs can be offloaded.

As shown in FIG. 3, the data offloading and transmission method may include the following steps:
Step 301: The eNB allocates a serving AP of WIFI to the UE by using a offloading configuration process, and sends a data offloading indication to the UE, so as to instruct the UE to perform data offloading, where the data offloading indication carries information of the serving AP.

The information of the serving AP may include an identifier of the serving AP.

Step 302: When there is data to be transmitted on the RB of the UE, the UE transmits, by using uplink transmission resources of short-range communications and/or uplink transmission resources of LTE, the data to be transmitted on the RB.

There includes the following cases in which there is data to be transmitted on the RB of the UE: Previously no data needs to be (or can be) transmitted on all RBs of the UE but now some data needs to be (or can be) transmitted on an RB; or data needs to be (or can be) transmitted on an RB of the UE, where the RB has a higher priority.

Specifically, if currently there are available uplink transmission resources of the LTE, the UE transmits, by using the available uplink transmission resources of the LTE, the data to be transmitted on the RB; or if currently there are available uplink transmission resources of the short-range communications, the UE transmits, by using the available uplink transmission resources of the short-range communications, the data to be transmitted on the RB; or if currently there are available uplink transmission resources of the LTE and available uplink transmission resources of the short-range communications, the UE transmits, by using the available uplink transmission resources of the LTE and/or the available uplink transmission resources of the short-range communications, the data to be transmitted on the RB.

Specifically, if currently there are available uplink transmission resources of the LTE and available uplink transmission resources of the WIFI, the UE may transmit by default, by using the available uplink transmission resources of the LTE, the data to be transmitted on the RB; or the UE transmits, by using the available uplink transmission resources of the LTE or the available uplink transmission resources of the WIFI according to the data offloading indication, the data to be transmitted on the RB; or the UE transmits, by randomly using the available uplink transmission resources of the LTE or the available uplink transmission resources of the WIFI, the data to be transmitted on the RB.

In this implementation manner, the UE may transmit, first by using the available uplink transmission resources of the WIFI, the data to be transmitted on the RB. If the transmission of the data to be transmitted on the RB cannot be completed by merely using the available uplink transmission resources of the WIFI, the UE may transmit, by using the available uplink transmission resources of the LTE, remaining data to be transmitted on the RB.

In this embodiment, if currently there are no available uplink transmission resources of the LTE or available uplink transmission resources of the WIFI, the UE may send an SR to the eNB to apply for the uplink transmission resources of the LTE, so as to transmit the data to be transmitted on the RB; or the UE may, instead of sending an SR, apply to the serving AP for the uplink transmission resources of the WiFi according to the information of the serving AP carried in the data offloading indication and by using a WIFI network, so as to transmit the data to be transmitted on the RB.

According to the foregoing embodiment, offloading by a WIFI network can be implemented from an LTE network. In this way, offloading and transmission between the WIFI network and the LTE network may be implemented, and the number of times of sending an SR can be reduced to reduce interference.

FIG. 4 is a flowchart of a data offloading and transmission method according to still another embodiment of the present invention. As shown in FIG. 4, the data offloading and transmission method may include the following steps:
Step 401: An eNB allocates a serving AP of WIFI to a UE by using a offloading configuration process, configures information of an RB of the UE, and sends a data offloading indication to the UE, so as to instruct the UE to perform data offloading, where the RB of the UE can be offloaded.

The data offloading indication carries information of the serving AP and the information of the RB of the UE that can be offloaded; and the information of the serving AP may include an identifier of the serving AP, and the information of the RB of the UE that can be offloaded may include an identifier of the RB of the UE that can be offloaded.

Step 402: The UE transmits data to be transmitted on the RB of the UE that can be offloaded.

Specifically, in an implementation manner of this embodiment, when there is data to be transmitted on the RB of the UE, where the RB of the UE is configured by the eNB and can be offloaded, a BSR is not triggered, regardless of whether a priority of the RB of the UE that can be offloaded is higher than priorities of other RBs on which there is data to be transmitted except the RB that can be offloaded, or whether there is no data for transmission on other RBs. If currently there are available uplink transmission resources of the WIFI, the UE transmits, by using the available uplink transmission resources of the WIFI, the data to be transmitted on the RB of the UE that can be offloaded; or if there are no available uplink transmission resources of the WIFI but there are available uplink transmission resources of the LTE, the UE transmits, by using the available uplink transmission resources of the LTE, the data to be transmitted on the RB of the UE that can be offloaded.

This implementation manner may reduce sending of an SR, and therefore may reduce interference caused by the sending of the SR to other UEs; or even the eNB may not configure an SR resource for the UE, thereby reducing SR resource occupation.

In another implantation manner of this embodiment, when there is data to be transmitted on the RB of the UE, where the RB of the UE is configured by the eNB and can be offloaded, if the priority of the RB of the UE that can be offloaded is higher than the priorities of other RBs on which there is data to be transmitted except the RB that can be offloaded, or if there is no data to be transmitted on other RBs, the UE sends a BSR to the eNB; and if currently there are available uplink transmission resources of the WIFI, the UE transmits, by using the available uplink transmission resources of the WIFI, the data to be transmitted on the RB of the UE that can be offloaded; or if currently there are no available uplink transmission resources of the WIFI but there are available uplink transmission resources of the LTE, the UE transmits, by using the available uplink transmission resources of the LTE, the data to be transmitted on the RB of the UE that can be offloaded; or if currently there are no available uplink transmission resources of the WIFI or available uplink transmission resources of the LTE, the UE sends an SR to the eNB to apply for uplink transmission resources of the LTE, so as to transmit the data to be transmitted on the RB of the UE that can be offloaded.

In this implementation manner, if currently there are available uplink transmission resources of the WIFI and/or available uplink transmission resources of the LTE, the UE may not send the SR to the eNB. Therefore, in this implementation manner, use of uplink transmission resources of the WIFI may be combined to reduce the sending of the SR, thereby reducing interference to other UEs caused by the sending of the SR.

In still another implementation manner of this embodiment, when there is data to be transmitted on the RB of the UE, where the RB of the UE is configured by the eNB and can be offloaded, the UE sends a BSR to the eNB; and if currently there are available uplink transmission resources of the WIFI, the UE transmits, by using the available uplink transmission resources of the WIFI, the data to be transmitted on the RB of the UE that can be offloaded; or if currently there are no available uplink transmission resources of the WIFI, the UE applies to the serving AP for the uplink transmission resources of the WIFI by using a WIFI network according to the information of the serving AP carried in the data offloading indication, so as to transmit the data to be transmitted on the RB of the UE that can be offloaded.

In this implementation manner, the RB of the UE may be placed by the eNB into a same LCG, where the RB of the UE is configured by the eNB and can be offloaded; and when there is data to be transmitted on the RB of the UE, the UE may normally send a BSR or even an SR to the eNB, where the RB of the UE is configured by the eNB and can be offloaded. After the UE sends the BSR to the eNB, the data to be transmitted on the RB of the UE that can be offloaded is transmitted by using the uplink transmission resources of the WIFI.

By placing the RB of the UE that can be offloaded into the same LCG, the eNB is capable of precisely obtaining an amount of the data to be transmitted by using the uplink transmission resources of the WIFI. After it is determined that the uplink transmission resources of the WIFI cannot meet a QoS requirement of the RB of the UE that can be offloaded, the eNB instructs the UE to transmit, by using the uplink transmission resources of the LTE, the data to be transmitted on the RB of the UE that can be offloaded.

Further, in this embodiment, if the transmission of the data to be transmitted on the RB of the UE cannot be completed by merely using the available uplink transmission resources of the WIFI, where the RB of the UE can be offloaded, and if currently there are available uplink transmission resources of the LTE, the UE transmits, by using the available uplink transmission resources of the LTE, remaining data to be transmitted on the RB of the UE that can be offloaded; or if the transmission of the data to be transmitted on the RB of the UE cannot be completed by merely using the available uplink transmission resources of the WIFI, where the RB of the UE can be offloaded, and if currently there are no available uplink transmission resources of the LTE, the UE sends an SR to the eNB to apply for the uplink transmission resources of the LTE, so as to transmit remaining data to be transmitted on the RB of the UE that can be offloaded.

In this embodiment, there includes the following two cases in which there is data to be transmitted on an RB of the UE, where the RB of the UE is configured by the eNB and can be offloaded:
(1) Originally there is no data to be transmitted on the RB of the UE, where the RB of the UE is configured by the eNB and can be offloaded, but now some data needs to be transmitted; (2) Originally there is data on the RB of the UE, where the RB of the UE is configured by the eNB and can be offloaded, but the data does not need to be (or cannot be) transmitted, for example, a data packet has already been sent at an RLC layer to a peer end but no acknowledgement message has been received from the peer end; or outside a sending window there is still data that needs to be transmitted but cannot be sent because the sending window is full, and now the data needs to be (or can be) transmitted.

According to the foregoing embodiment, offloading by a WIFI network can be implemented from an LTE network. In this way, offloading and transmission between the WIFI network and the LTE network may be implemented, and the number of times of sending an SR can be reduced to reduce interference.

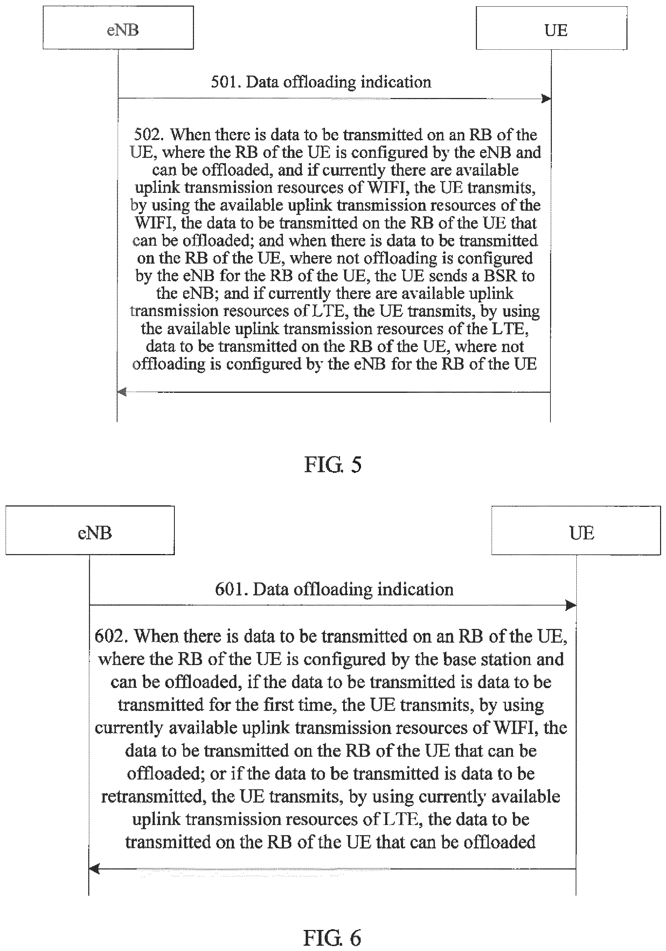

FIG. 5 is a flowchart of a data offloading and transmission method according to still another embodiment of the present invention. This embodiment is applicable to a scenario in which data offloading is RB-based, that is, an eNB needs to configure an RB of a UE, where the RB of the UE can be offloaded. Then during the data offloading and transmission, data of only the configured RB that can be offloaded can be transmitted by using uplink transmission resources of WIFI.

As shown in FIG. 5, the data offloading and transmission method may include the following steps:
Step 501: The eNB allocates a serving AP of the WIFI to the UE by using a offloading configuration process, configures information of the RB of the UE, and sends a data offloading indication to the UE, so as to instruct the UE to perform data offloading, where the RB of the UE can be offloaded.

The data offloading indication carries information of the serving AP and the information of the RB of the UE that can be offloaded; and the information of the serving AP may include an identifier of the serving AP, and the information of the RB of the UE that can be offloaded may include an identifier of the RB of the UE that can be offloaded.

Step 502: When there is data to be transmitted on the RB of the UE, where the RB of the UE is configured by the eNB and can be offloaded, and if currently there are available uplink transmission resources of the WIFI, the UE transmits, by using the available uplink transmission resources of the WIFI, the data to be transmitted on the RB of the UE that can be offloaded; or if currently there are no available uplink transmission resources of the WIFI, the UE applies to the serving AP for the uplink transmission resources of the WIFI by using a WIFI network according to the information of the serving AP carried in the data offloading indication, so as to transmit the data to be transmitted on the RB of the UE that can be offloaded.

When there is data to be transmitted on an RB of the UE, where not offloading is configured by the eNB for the RB of the UE, the UE sends a BSR to the eNB; and if currently there are available uplink transmission resources of the LTE, the UE transmits, by using the available uplink transmission resources of the LTE, data to be transmitted on the RB of the UE, where not offloading is configured by the eNB for the RB of the UE; or if currently there are no available uplink transmission resources of the LTE, the UE sends an SR to the eNB to apply for uplink transmission resources of the LTE, so as to transmit the data to be transmitted on the RB of the UE, where not offloading is configured by the eNB for the RB of the UE.

In this embodiment, there includes the following two cases in which there is data to be transmitted on the RB of the UE, where the RB of the UE is configured by the eNB and can be offloaded:
(1) Originally there is no data to be transmitted on the RB of the UE, where the RB of the UE is configured by the eNB and can be offloaded, but now some data needs to be transmitted;
(2) Originally there is data on the RB of the UE, where the RB of the UE is configured by the eNB and can be offloaded, but the data does not need to be (or cannot be) transmitted, for example, a data packet has already been sent at an RLC layer to a peer end but no acknowledgement message has been received from the peer end; or outside a sending window there is still data that needs to be transmitted but cannot be sent because the sending window is full, and now the data needs to be (or can be) transmitted.

There includes the following two cases in which there is data to be transmitted on an RB of the UE, where not offloading is configured by the eNB for the RB of the UE: (1) Originally there is no data to be transmitted on the RB of the UE, where not offloading is configured by the eNB for the RB of the UE, but now some data needs to be transmitted; (2) Originally there is data on the RB of the UE, where not offloading is configured by the eNB for the RB of the UE, but the data does not need to be (or cannot be) transmitted, for example, a data packet has already been sent at the RLC layer to a peer end but no acknowledgement message has been received from the peer end; or outside a sending window there is still data that needs to be transmitted but cannot be sent because the sending window is full, and now the data needs to be (or can be) transmitted.

According to the foregoing embodiment, offloading by a WIFI network can be implemented from an LTE network. In this way, offloading and transmission between the WIFI network and the LTE network may be implemented, and the number of times of sending an SR can be reduced to reduce interference.

FIG. 6 is a flowchart of a data offloading and transmission method according to still another embodiment of the present invention. As shown in FIG. 6, the data offloading and transmission method may include the following steps:
Step 601: An eNB allocates a serving AP of WIFI to a UE by using a offloading configuration process, configures information of an RB of the UE, and sends a data offloading indication to the UE, so as to instruct the UE to perform data offloading, where the RB of the UE can be offloaded.

The data offloading indication carries information of the serving AP and the information of the RB of the UE that can be offloaded; and the information of the serving AP may include an identifier of the serving AP, and the information of the RB of the UE that can be offloaded may include an identifier of the RB of the UE that can be offloaded.

Step 602: When there is data to be transmitted on the RB of the UE, where the RB of the UE is configured by the base station and can be offloaded, if the data to be transmitted is data to be transmitted for the first time, the UE transmits, by using currently available uplink transmission resources of the WIFI, the data to be transmitted on the RB of the UE that can be offloaded; or if the data to be transmitted is data to be retransmitted, the UE transmits, by using currently available uplink transmission resources of LTE, the data to be transmitted on the RB of the UE that can be offloaded.

In this embodiment, there includes the following two cases in which there is data to be transmitted on the RB of the UE, where the RB of the UE is configured by the eNB and can be offloaded: (1) Originally there is no data to be transmitted on the RB of the UE, where the RB of the UE is configured by the eNB and can be offloaded, but now some data needs to be transmitted; (2) Originally there is data that does not need to be transmitted on the RB of the UE, where the RB of the UE is configured by the eNB and can be offloaded, but now the data needs to be transmitted.

According to the foregoing embodiment, offloading by a WIFI network can be implemented from an LTE network. In this way, offloading and transmission between the WIFI network and the LTE network may be implemented, and the number of times of sending an SR can be reduced to reduce interference.

In the embodiments shown in FIG. 3 to FIG. 6, the UE may perform a multiplexing operation on data transmitted on at least one RB, on which data is transmitted by using the uplink transmission resources of the LTE, without considering and affecting an RB on which data is transmitted by using the uplink transmission resources of the short-range communications. When performing the multiplexing operation for the data that is transmitted on the at least one RB, on which the data is transmitted by using the uplink transmission resources of the LTE, the UE needs to update a respective Bj value of the at least one RB, on which the data is transmitted by using the uplink transmission resources of the LTE, where Bj is used to calculate, when the UE performs a first round of the multiplexing operation, an amount of data encapsulated in the RB, on which the data is transmitted by using the uplink transmission resources of the LTE.

Likewise, the UE may perform a multiplexing operation on data transmitted on at least one RB, on which data is transmitted by using the uplink transmission resources of the WIFI, without considering and affecting an RB on which data transmission is performed by using the uplink transmission resources of the LTE. When performing the multiplexing operation for the data that is transmitted on the at least one RB, on which the data is transmitted by using the uplink transmission resources of the WIFI, the UE needs to update a respective Bj value of the at least one RB, on which the data is transmitted by using the uplink transmission resources of the WIFI, where Bj is used to calculate, when the UE performs a first round of the multiplexing operation, an amount of data encapsulated in the RB, on which the data is transmitted by using the uplink transmission resources of the WIFI.

Here, j is a logical channel number that corresponds to the RB; Bj is initially 0 and decreases every TTI according to speed of a PBR of the RB, and cannot exceed a configured threshold; and Bj is used to calculate, when the UE performs the first round of the multiplexing operation, the amount of data encapsulated in the RB, equally decreases according to an amount of data actually encapsulated in the first round of the multiplexing operation, and then increases every TTI according to the speed of the PBR.

In this embodiment of the present invention, a multiplexing operation for the WIFI affects a multiplexing operation for the LTE. That is, in a scenario in which the UE cannot complete, by merely using the uplink transmission resources of the WIFI, transmission of data to be transmitted on an RB of the UE and the UE further needs to transmit, by using the uplink transmission resources of the LTE, remaining data to be transmitted on the RB, when transmitting the data by using the uplink transmission resources of the WIFI, the UE performs a multiplexing operation on data of at least one RB, on which data is transmitted by using the uplink transmission resources of the WIFI, and updates a respective Bj value of the at least one RB, on which the data is transmitted by using the uplink transmission resources of the WIFI; and if the transmission of the data on the at least one RB cannot be completed by merely using the uplink transmission resources of the WIFI, the UE performs a multiplexing operation when transmitting, by using currently available uplink transmission resources of the LTE, remaining data on the at least one RB, where the UE uses the updated Bj value of the at least one RB when performing the multiplexing operation for the remaining data on the at least one RB.

For example, if two RBs (RB1 and RB2) are configured so that data can be transmitted by using the WIFI, when data encapsulation is performed for resources of the WIFI, a multiplexing operation is performed only for RB1 and RB2, and at the same time B1 and B2 are updated. If transmission of data to be transmitted on RB1 and RB2 cannot be completed by merely using the uplink transmission resources of the WIFI, remaining data on RB1 and RB2 is transmitted by using the uplink transmission resources of the LTE and also a multiplexing operation is performed. Because B1 and B2 have been updated previously, the UE uses updated B1 and B2 when performing the multiplexing operation on the remaining data on RB1 and RB2.

In the embodiments shown in FIG. 3 to FIG. 6, the description is made by using an example that the WIFI technology is used for offloading traffic from the LTE network, but this is not limited in the embodiments of the present invention. The offloading and transmission method according to the embodiments of the present invention may also be applied to offloading, by using other short-range communications technologies except WIFI, traffic from other cellular networks except LTE.

Persons of ordinary skill in the art may understand that, all or a part of the steps of the foregoing method embodiments may be implemented by a program instructing relevant hardware. The foregoing program may be stored in a computer readable storage medium. When the program runs, the foregoing steps included in the method embodiments are performed. The foregoing storage medium includes various mediums capable of storing program code, such as a ROM, a RAM, a magnetic disk, or an optical disc.

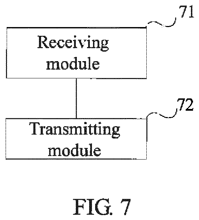

FIG. 7 is a schematic structural diagram of a user equipment according to an embodiment of the present invention. The user equipment in this embodiment can implement the process of the embodiment shown in FIG. 1. As shown in FIG. 7, the user equipment may include: a receiving module 71 and a transmitting module 72.

The receiving module 71 is configured to receive a data offloading indication sent by a base station, where the data offloading indication is sent by the base station to the user equipment after a serving access point of a short-range communications network is allocated by using a data offloading configuration process to the user equipment.

The transmitting module 72 is configured to perform data offloading and transmission by using uplink transmission resources of short-range communications and/or uplink transmission resources of LTE according to the data offloading indication received by the receiving module 71.

According to the foregoing user equipment, offloading by a short-range communications network can be implemented from an LTE network, thereby implementing offloading and transmission between the short-range communications network and the LTE network.

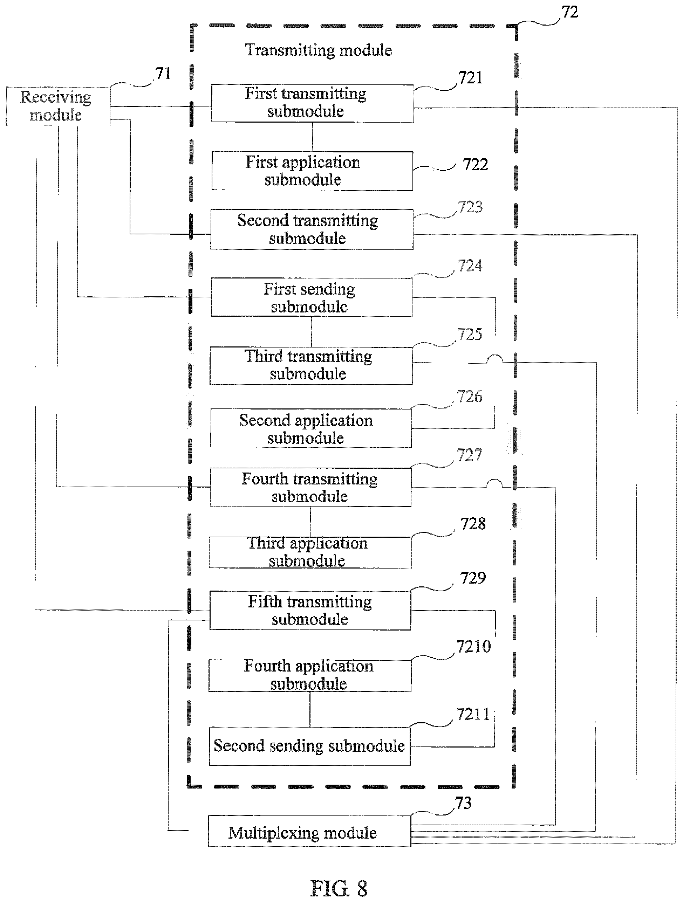

FIG. 8 is a schematic structural diagram of a user equipment according to another embodiment of the present invention. A difference from the user equipment shown in FIG. 7 lies in that in an implementation manner of this embodiment, the transmitting module 72 may include: a first transmitting submodule 721 and a first application submodule 722.

The first transmitting submodule 721 is configured to, when there is data to be transmitted on an RB of the user equipment, and if currently there are available uplink transmission resources of LTE, transmit, by using the available uplink transmission resources of the LTE, the data to be transmitted on the RB; or if currently there are available uplink transmission resources of short-range communications, transmit, by using the available uplink transmission resources of the short-range communications, the data to be transmitted on the RB; or if currently there are available uplink transmission resources of the LTE and available uplink transmission resources of the short-range communications, transmit, by using the available uplink transmission resources of the LTE and/or the available uplink transmission resources of the short-range communications, the data to be transmitted on the RB.

The first application submodule 722 is configured to, if currently there are no available uplink transmission resources of the LTE or available uplink transmission resources of the short-range communications, send an SR to the base station to apply for the uplink transmission resources of the LTE, so as to transmit the data to be transmitted on the RB; or apply to a serving access point for the uplink transmission resources of the short-range communications by using the short-range communications network according to information of the serving access point carried in the data offloading indication, so as to transmit the data to be transmitted on the RB.

In another implementation manner of this embodiment, the transmitting module 72 may include a second transmitting submodule 723.

The second transmitting submodule 723 is configured to, when the data offloading indication indicates that there is data to be transmitted on an RB of the user equipment, where the RB of the user equipment is configured by the base station and can be offloaded, and if currently there are available uplink transmission resources of the short-range communications, transmit, by using the available uplink transmission resources of the short-range communications, the data to be transmitted on the RB of the user equipment that can be offloaded; or if currently there are no available uplink transmission resources of the short-range communications but there are available uplink transmission resources of the LTE, transmit, by using the available uplink transmission resources of the LTE, the data to be transmitted on the RB of the user equipment that can be offloaded.

In still another implementation manner of this embodiment, the transmitting module 72 may include: a first sending submodule 724, a third transmitting submodule 725, and a second application submodule 726.

The first sending submodule 724 is configured to, when the data offloading indication indicates that there is data to be transmitted on an RB of the user equipment, where the RB of the user equipment is configured by the base station and can be offloaded, and if a priority of the RB is higher than other RBs of the user equipment on which there is already data to be transmitted except for the RB, or if there is no data to be transmitted on other RBs, send a BSR to the base station.

The third transmitting submodule 725 is configured to, when currently there are available uplink transmission resources of the short-range communications, transmit, by using the available uplink transmission resources of the short-range communications, the data to be transmitted on the RB of the user equipment that can be offloaded; or if currently there are no available uplink transmission resources of the short-range communications but there are available uplink transmission resources of the LTE, transmit, by using the available uplink transmission resources of the LTE, the data to be transmitted on the RB of the user equipment that can be offloaded.

The second application submodule 726 is configured to, when currently there are no available uplink transmission resources of the short-range communications or available uplink transmission resources of the LTE, send an SR to the base station to apply for the uplink transmission resources of the LTE, so as to transmit the data to be transmitted on the RB of the user equipment that can be offloaded.

In still another implementation manner of this embodiment, the transmitting module 72 may include: a fourth transmitting submodule 727 and a third application submodule 728.

The fourth transmitting submodule 727 is configured to, when the data offloading indication indicates that there is data to be transmitted on an RB of the user equipment, where the RB of the user equipment is configured by the base station and can be offloaded, and if currently there are available uplink transmission resources of the short-range communications, transmit, by using the available uplink transmission resources of the short-range communications, the data to be transmitted on the RB of the user equipment that can be offloaded, where the RB of the user equipment configured by the base station and can be offloaded is placed by the base station into a same LCG.

The third application submodule 728 is configured to, when currently there are no available uplink transmission resources of the short-range communications, apply to the serving access point for the uplink transmission resources of the short-range communications by using the short-range communications network, so as to transmit the data to be transmitted on the RB of the user equipment that can be offloaded.

In still another implementation manner of this embodiment, the transmitting module 72 may include: a fifth transmitting submodule 729, a fourth application submodule 7210, and a second sending submodule 7211.

The fifth transmitting submodule 729 is configured to, when the data offloading indication indicates that there is data to be transmitted on an RB of the user equipment, where the RB of the user equipment is configured by the base station and can be offloaded, and if currently there are available uplink transmission resources of the short-range communications, transmit, by using the available uplink transmission resources of the short-range communications, the data to be transmitted on the RB of the user equipment that can be offloaded.

The fourth application submodule 7210 is configured to, when currently there are no available uplink transmission resources of the short-range communications, apply to the serving access point for the uplink transmission resources of the short-range communications by using the short-range communications network, so as to transmit the data to be transmitted on the RB of the user equipment that can be offloaded.

The second sending submodule 7211 is configured to send a BSR to the base station when there is data to be transmitted on an RB of the user equipment, where not offloading is configured by the base station for the RB of the user equipment.

In this case, the fifth transmitting submodule 729 may further, if currently there are available uplink transmission resources of the LTE, transmit, by using the available uplink transmission resources of the LTE, the data to be transmitted on the RB of the UE, where not offloading is configured by the base station for the RB of the user equipment; and the fourth application submodule 7210 may further, if currently there are no available uplink transmission resources of the LTE, send an SR to the base station to apply for the uplink transmission resources of the LTE, so as to transmit the data to be transmitted on the RB of the user equipment, where not offloading is configured by the base station for the RB of the user equipment.

During specific implementation, the transmitting module 72 may include only the submodules in any one of the foregoing implementations, or may include submodules in at least two of the foregoing implementations, and this is not limited in this embodiment. The transmitting module 72 shown in FIG 8, however, is described by using an example that the submodules in all the foregoing implementations are included.

In this embodiment, further, the user equipment may further include:
a multiplexing module 73, configured to perform a multiplexing operation on data transmitted on at least one RB, on which data is transmitted by using the uplink transmission resources of the short-range communications, and update a respective Bj value of the at least one RB, on which the data is transmitted by using the uplink transmission resources of the short-range communications, where Bj is used to calculate, when the user equipment performs a first round of the multiplexing operation, an amount of data encapsulated in the RB, on which the data is transmitted by using the uplink transmission resources of the short-range communications; and when the transmission of the data on the at least one RB cannot be completed by merely using available uplink transmission resources of the short-range communications, perform a multiplexing operation when transmitting, by using currently available uplink transmission resources of the LTE, remaining data on the at least one RB, where the updated Bj value of the at least one RB is used when the multiplexing operation is performed for the remaining data on the at least one RB.

According to the foregoing user equipment, offloading by a short-range communications network can be implemented from a Long Term Evolution network, thereby implementing offloading and transmission between the short-range communications network and the Long Term Evolution network. In addition, the number of times of sending an SR can be reduced, thereby reducing interference to other user equipments.

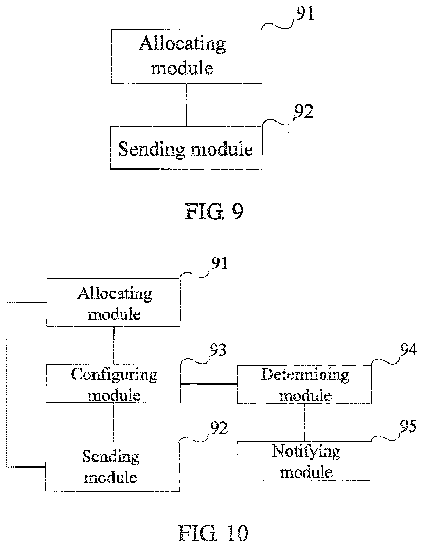

FIG 9 is a schematic structural diagram of a base station according to an embodiment of the present invention. The base station in this embodiment can implement the process of the embodiment shown in FIG. 2. As shown in FIG. 9, the base station may include: an allocating module 91 and a sending module 92.

The allocating module 91 is configured to allocate a serving access point of a short-range communications network to a user equipment by using a offloading configuration process.

The sending module 92 is configured to send a data offloading indication to the user equipment, so that the user equipment performs data offloading and transmission by using uplink transmission resources of short-range communications and/or uplink transmission resources of LTE according to the data offloading indication.

In the foregoing embodiment, an allocating module 91 allocates a serving access point to a user equipment by using a offloading configuration process, and a sending module 92 sends a data offloading indication to the user equipment, so that the user equipment performs data offloading and transmission by using uplink transmission resources of short-range communications and/or uplink transmission resources of LTE according to the data offloading indication. In this way, offloading by a short-range communications network can be implemented from an LTE network, thereby implementing offloading and transmission between the short-range communications network and the LTE network.

FIG. 10 is a schematic structural diagram of a base station according to another embodiment of the present invention. A difference from the base station shown in FIG. 9 lies in that the base station shown in FIG. 10 may further include: a configuring module 93, a determining module 94, and a notifying module 95.

The configuring module 93 is configured to configure an RB of a user equipment by using a offloading configuration process, where the RB of the user equipment can be offloaded; and in this case the sending module 92 may further add, in the data offloading indication, information of the RB of the user equipment, and send the information to the user equipment, where the RB of the user equipment is configured by the configuring module 93 and can be offloaded.

In this embodiment, the configuring module 93 may further place the RB of the user equipment into a same LCG, where the RB of the user equipment can be offloaded.

The determining module 94 is configured to determine whether the uplink transmission resources of the short-range communications can meet a QoS requirement of the RB in the same LCG.

The notifying module 95 is configured to, when the determining module 94 determines that the uplink transmission resources of the short-range communications cannot meet the QoS requirement of the RB in the same LCG, instruct the user equipment to transmit, by using the uplink transmission resources of the LTE, data to be transmitted on the RB in the same LCG.

According to the foregoing base station, offloading by a short-range communications network can be implemented from an LTE network, thereby implementing offloading and transmission between the short-range communications network and the LTE network.

Persons skilled in the art may understand that the accompanying drawings are only exemplary schematic diagrams of the embodiments and the modules or processes in the accompanying drawings are not necessarily mandatory for carrying out the present invention.

Persons skilled in the art may understand that the modules in the apparatuses provided in the embodiments may be arranged in the apparatuses in a distributed manner according to the description of the embodiments, or may be arranged in one or a plurality of apparatuses which are different from those described in the embodiments. The modules in the foregoing embodiments may be combined into one module, or split into a plurality of sub-modules.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the appended claims.

## Claims

1. A data offloading and transmission method, comprising:
receiving (101), by a user equipment, a data offloading indication sent by a base station, wherein the data offloading indication is sent by the base station to the user equipment after a serving access point of a short-range communications network is allocated by using a data offloading configuration process to the user equipment; and
performing (102), by the user equipment, data offloading and transmission by using uplink transmission resources of short-range communications and/or uplink transmission resources of Long Term Evolution according to the data offloading indication;
wherein the user equipment performs a multiplexing operation on data transmitted on at least one radio bearer, on which data is transmitted by using the uplink transmission resources of the Long Term Evolution or the short-range communications, without considering and affecting a radio bearer on which data is transmitted by using the uplink transmission resources of the short-range communications or the Long Term Evolution, respectively; and the user equipment updates a respective Bj value of the at least one radio bearer, on which the data is transmitted by using the uplink transmission resources of the Long Term Evolution or the short-range communications, respectively, wherein Bj is used to calculate, when the user equipment performs a first round of the multiplexing operation, an amount of data encapsulated in the radio bearer, on which the data is transmitted by using the uplink transmission resources of the Long Term Evolution or the short-range communications, respectively, and if the transmission of the data on the at least one radio bearer can not be completed by merely using the available uplink transmission resources of the Long Term Evolution or the short-range communications, respectively, the user equipment performs a multiplexing operation when transmitting, by using currently available uplink transmission resources of the Long Term Evolution or the short-range communications, respectively, remaining data on the at least one radio bearer, where the user equipment uses an updated Bj value of the at least one radio bearer when performing the multiplexing operation for the remaining data on the at least one radio bearer, wherein the operation of updating Bj is: during the first round of multiplexing, decreasing the value of Bj according to an actual amount of data encapsulated in the radio bearer that corresponds to Bj and, later, increasing Bj every transmission time interval, TTI, according to speed of a prioritized bitrate, PBR, of the radio bearer, until reaching a pre-configured value, wherein j is a logical channel number that corresponds to the radio bearer.

2. The method according to claim 1, wherein the performing (102), by the user equipment, data offloading and transmission by using uplink transmission resources of short-range communications and/or uplink transmission resources of Long Term Evolution according to the data offloading indication comprises:
when there is data to be transmitted on a radio bearer of the user equipment, and if currently there are available uplink transmission resources of the Long Term Evolution, transmitting, by the user equipment by using the available uplink transmission resources of the Long Term Evolution, the data to be transmitted on the radio bearer; or if currently there are available uplink transmission resources of the short-range communications, transmitting, by the user equipment by using the available uplink transmission resources of the short-range communications, the data to be transmitted on the radio bearer; or if currently there are available uplink transmission resources of the Long Term Evolution and available uplink transmission resources of the short-range communications, transmitting, by the user equipment by using the available uplink transmission resources of the Long Term Evolution and/or the available uplink transmission resources of the short-range communications, the data to be transmitted on the radio bearer.

3. The method according to claim 2, wherein the if currently there are available uplink transmission resources of the Long Term Evolution and available uplink transmission resources of the short-range communications, transmitting, by the user equipment by using the available uplink transmission resources of the Long Term Evolution or the available uplink transmission resources of the short-range communications, the data to be transmitted on the radio bearer comprises:
if currently there are available uplink transmission resources of the Long Term Evolution and available uplink transmission resources of the short-range communications, transmitting, by the user equipment, by default by using the available uplink transmission resources of the Long Term Evolution, the data to be transmitted on the radio bearer; or transmitting, by the user equipment, by using the available uplink transmission resources of the Long Term Evolution or the available uplink transmission resources of the short-range communication according to the data offloading indication, the data to be transmitted on the radio bearer; or transmitting, by the user equipment, by randomly using the available uplink transmission resources of the Long Term Evolution or the available uplink transmission resources of the short-range communications, the data to be transmitted on the radio bearer.

4. The method according to claim 2, wherein the transmitting, by the user equipment by using the available uplink transmission resources of the Long Term Evolution and the available uplink transmission resources of the short-range communications, the data to be transmitted on the radio bearer comprises:
transmitting, by the user equipment, by using the available uplink transmission resources of the short-range communications, the data to be transmitted on the radio bearer; and if the transmission of the data to be transmitted on the radio bearer cannot be completed by merely using the available uplink transmission resources of the short-range communications, transmitting, by the user equipment, by using the available uplink transmission resources of the Long Term Evolution, remaining data to be transmitted on the radio bearer.

5. The method according to claim 2, further comprising:
if currently there are no available uplink transmission resources of the Long Term Evolution or available uplink transmission resources of the short-range communications, sending, by the user equipment, a scheduling request to the base station to apply for the uplink transmission resources of the Long Term Evolution, so as to transmit the data to be transmitted on the radio bearer; or applying to the serving access point, by the user equipment, for the uplink transmission resources of the short-range communications by using the short-range communications network according to information of the serving access point carried in the data offloading indication, so as to transmit the data to be transmitted on the radio bearer.

6. The method according to claim 1, wherein the data offloading indication carries information of a radio bearer of the user equipment, the radio bearer of the user equipment is configured by the base station and can be offloaded; and the radio bearer of the user equipment configured by the base station and can be offloaded is placed by the base station into a same logical channel group; and
the performing (102), by the user equipment, data offloading and transmission by using uplink transmission resources of short-range communications and/or uplink transmission resources of Long Term Evolution according to the data offloading indication comprises:
if currently there are available uplink transmission resources of the short-range communications, transmitting, by the user equipment by using the available uplink transmission resources of the short-range communications, data to be transmitted on the radio bearer of the user equipment that can be offloaded; or if currently there are no available uplink transmission resources of the short-range communications, applying to the serving access point, by the user equipment, for the uplink transmission resources of the short-range communications by using the short-range communications network according to information of the serving access point carried in the data offloading indication, so as to transmit the data to be transmitted on the radio bearer of the user equipment that can be offloaded.

7. The method according to claim 1, wherein the data offloading indication carries information of a radio bearer of the user equipment, the radio bearer of the user equipment is configured by the base station and can be offloaded; and
the performing (102), by the user equipment, data offloading and transmission by using uplink transmission resources of short-range communications and/or uplink transmission resources of Long Term Evolution according to the data offloading indication comprises:
when there is data to be transmitted on the radio bearer of the user equipment, wherein the radio bearer of the user equipment is configured by the base station and can be offloaded, if the data to be transmitted is data to be transmitted for the first time, transmitting, by the user equipment by using currently available uplink transmission resources of the short-range communications, the data to be transmitted on the radio bearer of the user equipment that can be offloaded; or if the data to be transmitted is data to be retransmitted, transmitting, by the user equipment by using currently available uplink transmission resources of the Long Term Evolution, the data to be transmitted on the radio bearer of the user equipment that can be offloaded.

8. The method according to claim 4, wherein the data is transmitted by using the uplink transmission resources of the short-range communications, and the method further comprises:
if the transmission of the data on the at least one radio bearer cannot be completed by merely using available uplink transmission resources of the short-range communications, the user equipment performs a multiplexing operation when transmitting, by using currently available uplink transmission resources of the Long Term Evolution, remaining data on the at least one radio bearer, wherein the user equipment uses the updated Bj value of the at least one radio bearer when performing the multiplexing operation for the remaining data on the at least one radio bearer.

9. A user equipment, comprising:
a receiving module (71), configured to receive a data offloading indication sent by a base station, wherein the data offloading indication is sent by the base station to the user equipment after a serving access point of a short-range communications network is allocated by using a data offloading configuration process to the user equipment;
a transmitting module (72), configured to perform data offloading and transmission by using uplink transmission resources of short-range communications and/or uplink transmission resources of Long Term Evolution according to the data offloading indication received by the receiving module; and
a multiplexing module (73), configured to perform a multiplexing operation on data transmitted on at least one radio bearer, on which data is transmitted by using the uplink transmission resources of the Long Term Evolution or the short-range communications, without considering and affecting a radio bearer on which the data is transmitted by using the uplink transmission resources of the short-range communications or the Long Term Evolution, respectively; and update a respective Bj value of the at least one radio bearer, on which the data is transmitted by using the uplink transmission resources of the Long Term Evolutions or the short-range communications, respectively, wherein Bj is used to calculate, when the user equipment performs a first round of the multiplexing operation, an amount of data encapsulated in the radio bearer, on which the data is transmitted by using the uplink transmission resources of the Long Term Evolution or the short-range communications, respectively, the user equipment being adapted to, if the transmission of the data on the at least one radio bearer can not be completed by merely using the available uplink transmission resources of the Long Term Evolution or the short-range communications, respectively, perform a multiplexing operation when transmitting, by using currently available uplink transmission resources of the Long Term Evolution or the short-range communications, respectively, remaining data on the at least one radio bearer, the user equipment being adapted to use an updated Bj value of the at least one radio bearer when performing the multiplexing operation for the remaining data on the at least one radio bearer, wherein the operation of updating Bj is: during the first round of multiplexing, decreasing the value of Bj according to an actual amount of data encapsulated in the radio bearer that corresponds to Bj and, later, increasing Bj every transmission time interval, TTI, according to speed of a prioritized bitrate, PBR, of the radio bearer, until reaching a pre-configured value, wherein, j is a logical channel number that corresponds to the radio bearer;.

10. The user equipment according to claim 9, wherein the transmitting module (72) comprises:
a first transmitting submodule (721), configured to, when there is data to be transmitted on a radio bearer of the user equipment, and if currently there are available uplink transmission resources of the Long Term Evolution, transmit, by using the available uplink transmission resources of the Long Term Evolution, the data to be transmitted on the radio bearer; or if currently there are available uplink transmission resources of the short-range communications, transmit, by using the available uplink transmission resources of the short-range communications, the data to be transmitted on the radio bearer; or if currently there are available uplink transmission resources of the Long Term Evolution and available uplink transmission resources of the short-range communications, transmit, by using the available uplink transmission resources of the LTE and/or the available uplink transmission resources of the short-range communications, the data to be transmitted on the radio bearer.

11. The user equipment according to claim 10, wherein the transmitting module (72) further comprises:
a first application submodule (722), configured to, if currently there are no available uplink transmission resources of the Long Term Evolution or available uplink transmission resources of the short-range communications, send a scheduling request to the base station to apply for the uplink transmission resources of the Long Term Evolution, so as to transmit the data to be transmitted on the radio bearer; or apply to the serving access point for the uplink transmission resources of the short-range communications by using the short-range communications network according to information of the serving access point carried in the data offloading indication, so as to transmit the data to be transmitted on the radio bearer.

12. The user equipment according to claim 9, wherein the transmitting module (72) comprises:
a fourth transmitting submodule (727), configured to, when the data offloading indication indicates that there is data to be transmitted on a radio bearer of the user equipment, wherein the radio bearer of the user equipment is configured by the base station and can be offloaded, and if currently there are available uplink transmission resources of the short-range communications, transmit, by using the available uplink transmission resources of the short-range communications, the data to be transmitted on the radio bearer of the user equipment that can be offloaded, wherein the radio bearer of the user equipment that is configured by the base station and can be offloaded is placed by the base station into a same logical channel group; and
a third application submodule (728), configured to, when currently there are no available uplink transmission resources of the short-range communications, apply to the serving access point for the uplink transmission resources of the short-range communications by using the short-range communications network, so as to transmit the data to be transmitted on the radio bearer of the user equipment that can be offloaded.

## Patentansprüche

1. Verfahren zum Auslagern und Übertragen von Daten, umfassend:
Empfangen (101) eines von einer Basisstation gesendeten Datenauslagerungshinweises durch ein Nutzergerät, wobei der Datenauslagerungshinweis von der Basisstation an das Nutzergerät gesendet wird, nachdem dem Nutzergerät unter Verwendung eines Konfigurationsprozesses zur Datenauslagerung ein dienender Zugangspunkt eines Kurzstreckenkommunikationsnetzes zugewiesen wird, und
Durchführen (102) einer Datenauslagerung und -übertragung unter Verwendung von Uplink-Übertragungsressourcen einer Kurzstreckenkommunikation und/oder Uplink-Übertragungsressourcen von "Long Term Evolution" gemäß dem Datenauslagerungshinweis durch das Nutzergerät, wobei das Nutzergerät einen Multiplexvorgang mit Daten durchführt, die auf mindestens einem Funkträger übertragen werden, auf dem Daten unter Verwendung der Uplink-Übertragungsressourcen von "Long Term Evolution" oder der Kurzstreckenkommunikation übertragen werden, ohne einen Funkträger zu berücksichtigen und zu beeinträchtigen, auf dem Daten unter Verwendung der Uplink-Übertragungsressourcen der Kurzstreckenkommunikation bzw. von "Long Term Evolution" übertragen werden, und das Nutzergerät einen jeweiligen Bj-Wert des mindestens einen Funkträgers aktualisiert, auf dem die Daten unter Verwendung der Uplink-Übertragungsressourcen von "Long Term Evolution" bzw. der Kurzstreckenkommunikation übertragen werden, wobei Bj verwendet wird, um eine Datenmenge zu berechnen, die in dem Funkträger eingebettet ist, auf dem die Daten unter Verwendung der Uplink-Übertragungsressourcen von "Long Term Evolution" bzw. der Kurzstreckenkommunikation übertragen werden, wenn das Nutzergerät eine erste Runde des Multiplexvorgangs durchführt, und falls die Übertragung der Daten auf dem mindestens einen Funkträger nicht unter Verwendung nur der verfügbaren Uplink-Übertragungsressourcen von "Long Term Evolution" bzw. der Kurzstreckenkommunikation abgeschlossen werden kann, das Nutzergerät einen Multiplexvorgang durchführt, wenn es unter Verwendung aktuell verfügbarer Uplink-Übertragungsressourcen von "Long Term Evolution" bzw. der Kurzstreckenkommunikation verbleibende Daten auf dem mindestens einen Funkträger überträgt, wobei das Nutzergerät einen aktualisierten Bj-Wert des mindestens einen Funkträgers verwendet, wenn es den Multiplexvorgang für die verbleibenden Daten auf dem mindestens einen Funkträger durchführt, wobei der Bj-Aktualisierungsvorgang aus Folgendem besteht: Senken des Werts von Bj gemäß einer tatsächlichen Datenmenge, die in dem Bj entsprechenden Funkträger eingebettet ist, während der ersten Runde des Multiplexens, und anschließend Erhöhen von Bj in jedem Übertragungszeitintervall, TTI, gemäß der Geschwindigkeit einer priorisierten Bitrate, PBR, des Funkträgers, bis ein vorab konfigurierter Wert erreicht wird, wobei es sich bei j um eine logische Kanalnummer handelt, die dem Funkträger entspricht.

2. Verfahren nach Anspruch 1, wobei das Durchführen (102) der Datenauslagerung und -übertragung unter Verwendung von Uplink-Übertragungsressourcen der Kurzstreckenkommunikation und/oder von Uplink-Übertragungsressourcen von "Long Term Evolution" gemäß dem Datenauslagerungshinweis durch das Nutzergerät Folgendes umfasst:
wenn auf einem Funkträger des Nutzergeräts Daten zu übertragen sind und falls aktuell Uplink-Übertragungsressourcen von "Long Term Evolution" verfügbar sind, Übertragen der zu übertragenden Daten auf dem Funkträger durch das Nutzergerät unter Verwendung der verfügbaren Uplink-Übertragungsressourcen von "Long Term Evolution", oder falls aktuell Uplink-Übertragungsressourcen der Kurzstreckenkommunikation verfügbar sind, Übertragen der zu übertragenden Daten auf dem Funkträger durch das Nutzergerät unter Verwendung der verfügbaren Uplink-Übertragungsressourcen der Kurzstreckenkommunikation, oder falls aktuell Uplink-Übertragungsressourcen von "Long Term Evolution" und Uplink-Übertragungsressourcen der Kurzstreckenkommunikation verfügbar sind, Übertragen der zu übertragenden Daten auf dem Funkträger durch das Nutzergerät unter Verwendung der verfügbaren Uplink-Übertragungsressourcen von "Long Term Evolution" und/oder der verfügbaren Uplink-Übertragungsressourcen der Kurzstreckenkommunikation.

3. Verfahren nach Anspruch 2, wobei das Übertragen der zu übertragenden Daten auf dem Funkträger durch das Nutzergerät bei aktuell verfügbaren Uplink-Übertragungsressourcen von "Long Term Evolution" und verfügbaren Uplink-Übertragungsressourcen der Kurzstreckenkommunikation unter Verwendung der verfügbaren Uplink-Übertragungsressourcen von "Long Term Evolution" oder der verfügbaren Uplink-Übertragungsressourcen der Kurzstreckenkommunikation Folgendes umfasst:
falls aktuell Uplink-Übertragungsressourcen von "Long Term Evolution" und Uplink-Übertragungsressourcen der Kurzstreckenkommunikation verfügbar sind, standardmäßig Übertragen der zu übertragenden Daten auf dem Funkträger durch das Nutzergerät unter Verwendung der verfügbaren Uplink-Übertragungsressourcen von "Long Term Evolution", oder Übertragen der zu übertragenden Daten auf dem Funkträger durch das Nutzergerät unter Verwendung der verfügbaren Uplink-Übertragungsressourcen von "Long Term Evolution" oder der verfügbaren Uplink-Übertragungsressourcen der Kurzstreckenkommunikation gemäß dem Datenauslagerungshinweis, oder Übertragen der zu übertragenden Daten auf dem Funkträger durch das Nutzergerät unter zufälliger Verwendung der verfügbaren Uplink-Übertragungsressourcen von "Long Term Evolution" oder der verfügbaren Uplink-Übertragungsressourcen der Kurzstreckenkommunikation.

4. Verfahren nach Anspruch 2, wobei das Übertragen der zu übertragenden Daten auf dem Funkträger durch das Nutzergerät unter Verwendung der verfügbaren Uplink-Übertragungsressourcen von "Long Term Evolution" und der verfügbaren Uplink-Übertragungsressourcen der Kurzstreckenkommunikation Folgendes umfasst:
Übertragen der zu übertragenden Daten auf dem Funkträger durch das Nutzergerät unter Verwendung der verfügbaren Uplink-Übertragungsressourcen der Kurzstreckenkommunikation, und falls die Übertragung der auf dem Funkträger zu übertragenden Daten nicht unter Verwendung nur der verfügbaren Uplink-Übertragungsressourcen der Kurzstreckenkommunikation abgeschlossen werden kann, Übertragen verbleibender zu übertragender Daten auf dem Funkträger durch das Nutzergerät unter Verwendung der verfügbaren Uplink-Übertragungsressourcen von "Long Term Evolution".

5. Verfahren nach Anspruch 2, ferner umfassend:
falls aktuell keine Uplink-Übertragungsressourcen von "Long Term Evolution" oder Uplink-Übertragungsressourcen der Kurzstreckenkommunikation verfügbar sind, Senden einer Planungsanfrage durch das Nutzergerät an die Basisstation, um sich für die Uplink-Übertragungsressourcen von "Long Term Evolution" anzumelden, um die zu übertragenden Daten auf dem Funkträger zu übertragen, oder Anmelden für die Uplink-Übertragungsressourcen der Kurzstreckenkommunikation beim dienenden Zugangspunkt durch das Nutzergerät unter Verwendung des Kurzstreckenkommunikationsnetzes gemäß im Datenauslagerungshinweis enthaltenen Informationen des dienenden Zugangspunkts, um die zu übertragenden Daten auf dem Funkträger zu übertragen.

6. Verfahren nach Anspruch 1, wobei der Datenauslagerungshinweis Informationen eines Funkträgers des Nutzergeräts enthält und der Funkträger des Nutzergeräts durch die Basisstation konfiguriert ist und auslagerbar ist, und der durch die Basisstation konfigurierte und auslagerbare Funkträger des Nutzergeräts von der Basisstation in einer gleichen logischen Kanalgruppe platziert wird, und
das Durchführen (102) der Datenauslagerung und -übertragung durch das Nutzergerät unter Verwendung von Uplink-Übertragungsressourcen der Kurzstreckenkommunikation und/oder Uplink-Übertragungsressourcen von "Long Term Evolution" gemäß dem Datenauslagerungshinweis Folgendes umfasst:
falls aktuell Uplink-Übertragungsressourcen der Kurzstreckenkommunikation verfügbar sind, Übertragen von zu übertragenden Daten, die auslagerbar sind, auf dem Funkträger des Nutzergeräts durch das Nutzergerät unter Verwendung der verfügbaren Uplink-Übertragungsressourcen der Kurzstreckenkommunikation, oder falls aktuell keine Uplink-Übertragungsressourcen der Kurzstreckenkommunikation verfügbar sind, Anmelden für die Uplink-Übertragungsressourcen der Kurzstreckenkommunikation beim dienenden Zugangspunkt durch das Nutzergerät unter Verwendung des Kurzstreckenkommunikationsnetzes gemäß im Datenauslagerungshinweis enthaltenen Informationen des dienenden Zugangspunkts, um die zu übertragenden Daten, die auslagerbar sind, auf dem Funkträger des Nutzergeräts zu übertragen.

7. Verfahren nach Anspruch 1, wobei der Datenauslagerungshinweis Informationen eines Funkträgers des Nutzergeräts enthält und der Funkträger des Nutzergeräts durch die Basisstation konfiguriert ist und auslagerbar ist, und
das Durchführen (102) der Datenauslagerung und -übertragung durch das Nutzergerät unter Verwendung von Uplink-Übertragungsressourcen der Kurzstreckenkommunikation und/oder Uplink-Übertragungsressourcen von "Long Term Evolution" gemäß dem Datenauslagerungshinweis Folgendes umfasst:
wenn auf dem Funkträger des Nutzergeräts Daten zu übertragen sind, wobei der Funkträger des Nutzergeräts durch die Basisstation konfiguriert ist und auslagerbar ist, Übertragen der zu übertragenden Daten, die auslagerbar sind, auf dem Funkträger des Nutzergeräts durch das Nutzergerät unter Verwendung aktuell verfügbarer Uplink-Übertragungsressourcen der Kurzstreckenkommunikation, falls es sich bei den zu übertragenden Daten um erstmalig zu übertragende Daten handelt, oder Übertragen der zu übertragenden Daten, die auslagerbar sind, auf dem Funkträger des Nutzergeräts durch das Nutzergerät unter Verwendung aktuell verfügbarer Uplink-Übertragungsressourcen von "Long Term Evolution", falls es sich bei den zu übertragenden Daten um erneut zu übertragende Daten handelt.

8. Verfahren nach Anspruch 4, wobei die Daten unter Verwendung der Uplink-Übertragungsressourcen der Kurzstreckenkommunikation übertragen werden und das Verfahren ferner Folgendes umfasst:
falls die Übertragung der Daten auf dem mindestens einen Funkträger nicht unter Verwendung nur verfügbarer Uplink-Übertragungsressourcen der Kurzstreckenkommunikation abgeschlossen werden kann, führt das Nutzergerät einen Multiplexvorgang durch, wenn es unter Verwendung aktuell verfügbarer Uplink-Übertragungsressourcen von "Long Term Evolution" verbleibende Daten auf dem mindestens einen Funkträger überträgt, wobei das Nutzergerät beim Durchführen des Multiplexvorgangs für die verbleibenden Daten auf dem mindestens einen Funkträger den aktualisierten Bj-Wert des mindestens einen Funkträgers verwendet.

9. Nutzergerät, umfassend:
ein Empfangsmodul (71), das dafür konfiguriert ist, einen von einer Basisstation gesendeten Datenauslagerungshinweis zu empfangen, wobei der Datenauslagerungshinweis von der Basisstation an das Nutzergerät gesendet wird, nachdem dem Nutzergerät unter Verwendung eines Konfigurationsprozesses zur Datenauslagerung ein dienender Zugangspunkt eines Kurzstreckenkommunikationsnetzes zugewiesen wird,
ein Übertragungsmodul (72), das dafür konfiguriert ist, Datenauslagerung und - übertragung unter Verwendung von Uplink-Übertragungsressourcen der Kurzstreckenkommunikation und/oder Uplink-Übertragungsressourcen von "Long Term Evolution" gemäß dem durch das Empfangsmodul empfangenen Datenauslagerungshinweis durchzuführen, und
ein Multiplexmodul (73), das dafür konfiguriert ist, einen Multiplexvorgang mit Daten durchzuführen, die auf mindestens einem Funkträger übertragen werden, auf dem Daten unter Verwendung der Uplink-Übertragungsressourcen von "Long Term Evolution" oder der Kurzstreckenkommunikation übertragen werden, ohne einen Funkträger zu berücksichtigen und zu beeinträchtigen, auf dem Daten unter Verwendung der Uplink-Übertragungsressourcen der Kurzstreckenkommunikation bzw. von "Long Term Evolution" übertragen werden, und einen jeweiligen Bj-Wert des mindestens einen Funkträgers zu aktualisieren, auf dem die Daten unter Verwendung der Uplink-Übertragungsressourcen von "Long Term Evolution" bzw. der Kurzstreckenkommunikation übertragen werden, wobei Bj verwendet wird, um eine Datenmenge zu berechnen, die in dem Funkträger eingebettet ist, auf dem die Daten unter Verwendung der Uplink-Übertragungsressourcen von "Long Term Evolution" bzw. der Kurzstreckenkommunikation übertragen werden, wenn das Nutzergerät eine erste Runde des Multiplexvorgangs durchführt, wobei das Nutzergerät dafür eingerichtet ist, einen Multiplexvorgang durchzuführen, wenn es unter Verwendung aktuell verfügbarer Uplink-Übertragungsressourcen von "Long Term Evolution" bzw. der Kurzstreckenkommunikation verbleibende Daten auf dem mindestens einen Funkträger überträgt, falls die Übertragung der Daten auf dem mindestens einen Funkträger nicht unter Verwendung nur der verfügbaren Uplink-Übertragungsressourcen von "Long Term Evolution" bzw. der Kurzstreckenkommunikation abgeschlossen werden kann, wobei das Nutzergerät dafür eingerichtet ist, einen aktualisierten Bj-Wert des mindestens einen Funkträgers zu verwenden, wenn es den Multiplexvorgang für die verbleibenden Daten auf dem mindestens einen Funkträger durchführt, wobei der Bj-Aktualisierungsvorgang aus Folgendem besteht: Senken des Werts von Bj gemäß einer tatsächlichen Datenmenge, die in dem Bj entsprechenden Funkträger eingebettet ist, während der ersten Runde des Multiplexens, und anschließend Erhöhen von Bj in jedem Übertragungszeitintervall, TTI, gemäß der Geschwindigkeit einer priorisierten Bitrate, PBR, des Funkträgers, bis ein vorab konfigurierter Wert erreicht wird, wobei es sich bei j um eine logische Kanalnummer handelt, die dem Funkträger entspricht.

10. Nutzergerät nach Anspruch 9, wobei das Übertragungsmodul (72) Folgendes umfasst:
ein erstes Übertragungsteilmodul (721), das dafür konfiguriert ist, wenn Daten auf einem Funkträger des Nutzergeräts zu übertragen sind und falls aktuell Uplink-Übertragungsressourcen von "Long Term Evolution" verfügbar sind, die zu übertragenden Daten unter Verwendung der verfügbaren Uplink-Übertragungsressourcen von "Long Term Evolution" auf dem Funkträger zu übertragen, oder falls aktuell Uplink-Übertragungsressourcen der Kurzstreckenkommunikation verfügbar sind, die zu übertragenden Daten unter Verwendung der verfügbaren Uplink-Übertragungsressourcen der Kurzstreckenkommunikation auf dem Funkträger zu übertragen, oder falls aktuell Uplink-Übertragungsressourcen von "Long Term Evolution" und Uplink-Übertragungsressourcen der Kurzstreckenkommunikation verfügbar sind, die zu übertragenden Daten unter Verwendung der verfügbaren Uplink-Übertragungsressourcen von LTE und/oder der verfügbaren Uplink-Übertragungsressourcen der Kurzstreckenkommunikation auf dem Funkträger zu übertragen.

11. Nutzergerät nach Anspruch 10, wobei das Übertragungsmodul (72) ferner Folgendes umfasst:
ein erstes Anmeldeteilmodul (722), das dafür konfiguriert ist, falls aktuell keine Uplink-Übertragungsressourcen von "Long Term Evolution" oder Uplink-Übertragungsressourcen der Kurzstreckenkommunikation verfügbar sind, eine Planungsanfrage an die Basisstation zu senden, um sich für die Uplink-Übertragungsressourcen von "Long Term Evolution" anzumelden, um die zu übertragenden Daten auf dem Funkträger zu übertragen, oder sich beim dienenden Zugangspunkt für die Uplink-Übertragungsressourcen der Kurzstreckenkommunikation unter Verwendung des Kurzstreckenkommunikationsnetzes gemäß im Datenauslagerungshinweis enthaltenen Informationen des dienenden Zugangspunkts anzumelden, um die zu übertragenden Daten auf dem Funkträger zu übertragen.

12. Nutzergerät nach Anspruch 9, wobei das Übertragungsmodul (72) Folgendes umfasst:
ein viertes Übertragungsteilmodul (727), das dafür konfiguriert ist, wenn der Datenauslagerungshinweis angibt, dass Daten auf einem Funkträger des Nutzergeräts zu übertragen sind, wobei der Funkträger des Nutzergeräts durch die Basisstation konfiguriert ist und auslagerbar ist, und falls aktuell Uplink-Übertragungsressourcen der Kurzstreckenkommunikation verfügbar sind, unter Verwendung der verfügbaren Uplink-Übertragungsressourcen der Kurzstreckenkommunikation die zu übertragenden Daten, die auslagerbar sind, auf dem Funkträger des Nutzergeräts zu übertragen, wobei der durch die Basisstation konfigurierte und auslagerbare Funkträger von der Basisstation in einer gleichen logischen Kanalgruppe platziert wird, und
ein drittes Anmeldeteilmodul (728), das dafür konfiguriert ist, wenn aktuell keine Uplink-Übertragungsressourcen der Kurzstreckenkommunikation verfügbar sind, sich beim dienenden Zugangspunkt für die Uplink-Übertragungsressourcen der Kurzstreckenkommunikation unter Verwendung des Kurzstreckenkommunikationsnetzes anzumelden, um die zu übertragenden Daten, die auslagerbar sind, auf dem Funkträger des Nutzergeräts zu übertragen.

## Revendications

1. Procédé de délestage et d'émission de données, comportant les étapes consistant à :
faire recevoir (101), par un équipement d'utilisateur, une indication de délestage de données émise par une station de base, l'indication de délestage de données étant envoyée par la station de base à l'équipement d'utilisateur après qu'un point d'accès de desserte d'un réseau de communications à courte portée a été attribué à l'équipement d'utilisateur en utilisant un processus de configuration de délestage de données ; et
faire effectuer (102), par l'équipement d'utilisateur, un délestage et une émission de données en utilisant des ressources d'émission en liaison montante de communications à courte portée et/ou des ressources d'émission en liaison montante d'Évolution à long terme d'après l'indication de délestage de données ; l'équipement d'utilisateur effectuant une opération de multiplexage sur des données émises sur au moins un support radio, sur lequel des données sont émises en utilisant les ressources d'émission en liaison montante de l'Évolution à long terme ou des communications à courte portée, sans considérer et affecter un support radio sur lequel des données sont émises en utilisant les ressources d'émission en liaison montante des communications à courte portée ou de l'Évolution à long terme, respectivement ; et l'équipement d'utilisateur mettant à jour une valeur respective de Bj du ou des supports radio, sur lesquels les données sont émises en utilisant les ressources d'émission en liaison montante de l'Évolution à long terme ou des communications à courte portée, respectivement, Bj étant utilisé pour calculer, lorsque l'équipement d'utilisateur effectue un premier cycle de l'opération de multiplexage, une quantité de données encapsulées dans le support radio, sur lequel les données sont émises en utilisant les ressources d'émission en liaison montante de l'Évolution à long terme ou des communications à courte portée, respectivement, et si l'émission des données sur le ou les supports radio ne peut pas être accomplie simplement en utilisant les ressources d'émission en liaison montante disponibles de l'Évolution à long terme ou des communications à courte portée, respectivement, l'équipement d'utilisateur effectue une opération de multiplexage lorsqu'il émet, en utilisant des ressources d'émission en liaison montante actuellement disponibles de l'Évolution à long terme ou des communications à courte portée, respectivement, des données restantes sur le ou les supports radio, l'équipement d'utilisateur utilisant une valeur mise à jour de Bj du ou des supports radio lorsqu'il effectue l'opération de multiplexage pour les données restantes sur le ou les supports radio, l'opération de mise à jour de Bj consistant : pendant le premier cycle de multiplexage, à diminuer la valeur de Bj en fonction d'une quantité réelle de données encapsulées dans le support radio qui correspond à Bj et, ultérieurement, à augmenter Bj à chaque intervalle de temps d'émission, TTI, en fonction de la vitesse d'un débit binaire avec priorité, PBR, du support radio, jusqu'à atteindre une valeur préconfigurée, j étant un numéro de canal logique qui correspond au support radio.

2. Procédé selon la revendication 1, la réalisation (102), par l'équipement d'utilisateur, d'un délestage et d'une émission de données en utilisant des ressources d'émission en liaison montante de communications à courte portée et/ou des ressources d'émission en liaison montante d'Évolution à long terme d'après l'indication de délestage de données comportant les étapes consistant :
lorsqu'il existe des données à émettre sur un support radio de l'équipement d'utilisateur, et s'il existe actuellement des ressources d'émission en liaison montante disponibles de l'Évolution à long terme, à faire émettre, par l'équipement d'utilisateur en utilisant les ressources d'émission en liaison montante disponibles de l'Évolution à long terme, les données à émettre sur le support radio ; ou s'il existe actuellement des ressources d'émission en liaison montante disponibles des communications à courte portée, à faire émettre, par l'équipement d'utilisateur en utilisant les ressources d'émission en liaison montante disponibles des communications à courte portée, les données à émettre sur le support radio ; ou s'il existe actuellement des ressources d'émission en liaison montante disponibles de l'Évolution à long terme et des ressources d'émission en liaison montante disponibles des communications à courte portée, à faire émettre, par l'équipement d'utilisateur en utilisant les ressources d'émission en liaison montante disponibles de l'Évolution à long terme et/ou les ressources d'émission en liaison montante disponibles des communications à courte portée, les données à émettre sur le support radio.

3. Procédé selon la revendication 2, l'étape consistant, s'il existe actuellement des ressources d'émission en liaison montante disponibles de l'Évolution à long terme et des ressources d'émission en liaison montante disponibles des communications à courte portée, à faire émettre, par l'équipement d'utilisateur en utilisant les ressources d'émission en liaison montante disponibles de l'Évolution à long terme ou les ressources d'émission en liaison montante disponibles des communications à courte portée, les données à émettre sur le support radio comportant les étapes consistant :
s'il existe actuellement des ressources d'émission en liaison montante disponibles de l'Évolution à long terme et des ressources d'émission en liaison montante disponibles des communications à courte portée, à faire émettre, par l'équipement d'utilisateur, par défaut en utilisant les ressources d'émission en liaison montante disponibles de l'Évolution à long terme, les données à émettre sur le support radio ; ou à faire émettre, par l'équipement d'utilisateur, en utilisant les ressources d'émission en liaison montante disponibles de l'Évolution à long terme ou les ressources d'émission en liaison montante disponibles des communications à courte portée d'après l'indication de délestage de données les données à émettre sur le support radio ; ou à faire émettre, par l'équipement d'utilisateur, en utilisant aléatoirement les ressources d'émission en liaison montante disponibles de l'Évolution à long terme ou les ressources d'émission en liaison montante disponibles des communications à courte portée, les données à émettre sur le support radio.

4. Procédé selon la revendication 2, l'émission, par l'équipement d'utilisateur en utilisant les ressources d'émission en liaison montante disponibles de l'Évolution à long terme et les ressources d'émission en liaison montante disponibles des communications à courte portée, les données à émettre sur le support radio comportant les étapes consistant à :
faire émettre, par l'équipement d'utilisateur, en utilisant les ressources d'émission en liaison montante disponibles des communications à courte portée, les données à émettre sur le support radio ; et si l'émission des données à émettre sur le support radio ne peut pas être accomplie simplement en utilisant les ressources d'émission en liaison montante disponibles des communications à courte portée, faire émettre, par l'équipement d'utilisateur, en utilisant les ressources d'émission en liaison montante disponibles de l'Évolution à long terme, des données restantes à émettre sur le support radio.

5. Procédé selon la revendication 2, comportant en outre :
s'il n'existe pas actuellement de ressources d'émission en liaison montante disponibles de l'Évolution à long terme ou de ressources d'émission en liaison montante disponibles des communications à courte portée, faire envoyer, par l'équipement d'utilisateur, une demande de programmation à la station de base pour solliciter les ressources d'émission en liaison montante de l'Évolution à long terme, de façon à émettre les données à émettre sur le support radio ; ou faire solliciter auprès du point d'accès de desserte, par l'équipement d'utilisateur, les ressources d'émission en liaison montante des communications à courte portée en utilisant le réseau de communications à courte portée d'après des informations du point d'accès de desserte transportées dans l'indication de délestage de données, de façon à émettre les données à émettre sur le support radio.

6. Procédé selon la revendication 1, l'indication de délestage de données transportant des informations d'un support radio de l'équipement d'utilisateur, le support radio de l'équipement d'utilisateur étant configuré par la station de base et pouvant être délesté ; et le support radio de l'équipement d'utilisateur qui est configuré par la station de base et peut être délesté étant placé par la station de base dans un même groupe de canaux logiques ; et
la réalisation (102), par l'équipement d'utilisateur, d'un délestage et d'une émission de données en utilisant des ressources d'émission en liaison montante de communications à courte portée et/ou des ressources d'émission en liaison montante d'Évolution à long terme d'après l'indication de délestage de données comportant les étapes consistant :
s'il existe actuellement des ressources d'émission en liaison montante disponibles des communications à courte portée, à faire émettre, par l'équipement d'utilisateur en utilisant les ressources d'émission en liaison montante disponibles des communications à courte portée, des données à émettre sur le support radio de l'équipement d'utilisateur qui peut être délesté ; ou s'il n'existe pas actuellement de ressources d'émission en liaison montante disponibles des communications à courte portée, à faire solliciter auprès du point d'accès de desserte, par l'équipement d'utilisateur, les ressources d'émission en liaison montante des communications à courte portée en utilisant le réseau de communications à courte portée d'après des informations du point d'accès de desserte transportées dans l'indication de délestage de données, de façon à émettre les données à émettre sur le support radio de l'équipement d'utilisateur qui peut être délesté.

7. Procédé selon la revendication 1, l'indication de délestage de données transportant des informations d'un support radio de l'équipement d'utilisateur, le support radio de l'équipement d'utilisateur étant configuré par la station de base et pouvant être délesté ; et
la réalisation (102), par l'équipement d'utilisateur, d'un délestage et d'une émission de données en utilisant des ressources d'émission en liaison montante de communications à courte portée et/ou des ressources d'émission en liaison montante d'Évolution à long terme d'après l'indication de délestage de données comportant les étapes consistant :
lorsqu'il existe des données à émettre sur le support radio de l'équipement d'utilisateur, le support radio de l'équipement d'utilisateur étant configuré par la station de base et pouvant être délesté, si les données à émettre sont des données à émettre pour la première fois, à faire émettre, par l'équipement d'utilisateur en utilisant des ressources d'émission en liaison montante actuellement disponibles des communications à courte portée, les données à émettre sur le support radio de l'équipement d'utilisateur qui peut être délesté ; ou si les données à émettre sont des données à réémettre, à faire émettre, par l'équipement d'utilisateur en utilisant des ressources d'émission en liaison montante actuellement disponibles de l'Évolution à long terme, les données à émettre sur le support radio de l'équipement d'utilisateur qui peut être délesté.

8. Procédé selon la revendication 4, les données étant émises en utilisant les ressources d'émission en liaison montante des communications à courte portée, et le procédé comportant en outre l'étape lors de laquelle :
si l'émission des données sur le ou les supports radio ne peut pas être accomplie simplement en utilisant des ressources d'émission en liaison montante disponibles des communications à courte portée, l'équipement d'utilisateur effectue une opération de multiplexage lorsqu'il émet, en utilisant des ressources d'émission en liaison montante actuellement disponibles de l'Évolution à long terme, des données restantes sur le ou les supports radio, l'équipement d'utilisateur utilisant la valeur mise à jour de Bj du ou des supports radio lorsqu'il effectue l'opération de multiplexage pour les données restantes sur le ou les supports radio.

9. Équipement d'utilisateur, comportant :
un module (71) de réception, configuré pour recevoir une indication de délestage de données émise par une station de base, l'indication de délestage de données étant envoyée par la station de base à l'équipement d'utilisateur après qu'un point d'accès de desserte d'un réseau de communications à courte portée a été attribué à l'équipement d'utilisateur en utilisant un processus de configuration de délestage de données ;
un module (72) d'émission, configuré pour effectuer un délestage et une émission de données en utilisant des ressources d'émission en liaison montante de communications à courte portée et/ou des ressources d'émission en liaison montante d'Évolution à long terme d'après l'indication de délestage de données reçue par le module de réception ; et
un module (73) de multiplexage, configuré pour effectuer une opération de multiplexage sur des données émises sur au moins un support radio, sur lequel des données sont émises en utilisant les ressources d'émission en liaison montante de l'Évolution à long terme ou des communications à courte portée, sans considérer et affecter un support radio sur lequel les données sont émises en utilisant les ressources d'émission en liaison montante des communications à courte portée ou de l'Évolution à long terme, respectivement ; et mettre à jour une valeur respective de Bj du ou des supports radio, sur lesquels les données sont émises en utilisant les ressources d'émission en liaison montante de l'Évolution à long terme ou des communications à courte portée, respectivement, Bj étant utilisé pour calculer, lorsque l'équipement d'utilisateur effectue un premier cycle de l'opération de multiplexage, une quantité de données encapsulées dans le support radio, sur lequel les données sont émises en utilisant les ressources d'émission en liaison montante de l'Évolution à long terme ou des communications à courte portée, respectivement, l'équipement d'utilisateur étant prévu pour, si l'émission des données sur le ou les supports radio ne peut pas être accomplie simplement en utilisant les ressources d'émission en liaison montante disponibles de l'Évolution à long terme ou des communications à courte portée, respectivement, effectuer une opération de multiplexage lorsqu'il émet, en utilisant des ressources d'émission en liaison montante actuellement disponibles de l'Évolution à long terme ou des communications à courte portée, respectivement, des données restantes sur le ou les supports radio, l'équipement d'utilisateur étant prévu pour utiliser une valeur mise à jour de Bj du ou des supports radio lorsqu'il effectue l'opération de multiplexage pour les données restantes sur le ou les supports radio, l'opération de mise à jour de Bj consistant : pendant le premier cycle de multiplexage, à diminuer la valeur de Bj en fonction d'une quantité réelle de données encapsulées dans le support radio qui correspond à Bj et, ultérieurement, à augmenter Bj à chaque intervalle de temps d'émission, TTI, en fonction de la vitesse d'un débit binaire avec priorité, PBR, du support radio, jusqu'à atteindre une valeur préconfigurée, j étant un numéro de canal logique qui correspond au support radio.

10. Équipement d'utilisateur selon la revendication 9, le module (72) d'émission comportant :
un premier sous-module (721) d'émission, configuré pour, lorsqu'il existe des données à émettre sur un support radio de l'équipement d'utilisateur, et s'il existe actuellement des ressources d'émission en liaison montante disponibles de l'Évolution à long terme, émettre, en utilisant les ressources d'émission en liaison montante disponibles de l'Évolution à long terme, les données à émettre sur le support radio ; ou s'il existe actuellement des ressources d'émission en liaison montante disponibles des communications à courte portée, émettre, en utilisant les ressources d'émission en liaison montante disponibles des communications à courte portée, les données à émettre sur le support radio ; ou s'il existe actuellement des ressources d'émission en liaison montante disponibles de l'Évolution à long terme et des ressources d'émission en liaison montante disponibles des communications à courte portée, émettre, en utilisant les ressources d'émission en liaison montante disponibles du LTE et/ou des ressources d'émission en liaison montante disponibles des communications à courte portée, les données à émettre sur le support radio.

11. Équipement d'utilisateur selon la revendication 10, le module (72) d'émission comportant en outre :
un premier sous-module (722) d'application, configuré pour, s'il n'existe pas actuellement de ressources d'émission en liaison montante disponibles de l'Évolution à long terme ou ressources d'émission en liaison montante disponibles des communications à courte portée, envoyer une demande de programmation à la station de base pour solliciter les ressources d'émission en liaison montante de l'Évolution à long terme, de façon à émettre les données à émettre sur le support radio ; ou solliciter, auprès du point d'accès de desserte, les ressources d'émission en liaison montante des communications à courte portée en utilisant le réseau de communications à courte portée d'après des informations du point d'accès de desserte transportées dans l'indication de délestage de données, de façon à émettre les données à émettre sur le support radio.

12. Équipement d'utilisateur selon la revendication 9, le module (72) d'émission comportant :
un quatrième sous-module (727) d'émission, configuré pour, lorsque l'indication de délestage de données indique qu'il existe des données à émettre sur un support radio de l'équipement d'utilisateur, le support radio de l'équipement d'utilisateur étant configuré par la station de base et pouvant être délesté, et s'il existe actuellement des ressources d'émission en liaison montante disponibles des communications à courte portée, émettre, en utilisant les ressources d'émission en liaison montante disponibles des communications à courte portée, les données à émettre sur le support radio de l'équipement d'utilisateur qui peut être délesté, le support radio de l'équipement d'utilisateur qui est configuré par la station de base et peut être délesté étant placé par la station de base dans un même groupe de canaux logiques ; et
un troisième sous-module (728) d'application, configuré pour, lorsqu'il n'existe pas actuellement de ressources d'émission en liaison montante disponibles des communications à courte portée, solliciter, auprès du point d'accès de desserte, les ressources d'émission en liaison montante des communications à courte portée en utilisant le réseau de communications à courte portée, de façon à émettre les données à émettre sur le support radio de l'équipement d'utilisateur qui peut être délesté.
